# EUROPEAN PATENT SPECIFICATION

(11) **EP 2 996 886 B1**
(45) Date of publication and mention of the grant of the patent: **05.07.2017**
(21) Application number: 14725518.6
(22) Date of filing: 15.05.2014
(51) Int. Cl.: B42D 25/351, B42D 25/40, B42D 25/29

(54) **SECURITY DOCUMENTS AND METHODS OF MANUFACTURE**
SICHERHEITSDOKUMENTE UND VERFAHREN ZUR HERSTELLUNG DAVON
DOCUMENTS DE SÉCURITÉ ET PROCÉDÉS DE FABRICATION

(30) Priority: 17.05.2013 GB 201308969
(43) Date of publication of application: 23.03.2016
(73) Proprietor: De La Rue International Limited, Basingstoke Hampshire RG22 4BS (GB)
(72) Inventor: HOLMES, Brian, Fleet Hampshire GU51 5HZ (GB)
(74) Representative: Gill Jennings & Every LLP
(86) International application number: PCT/GB2014/051487
(87) International publication number: WO 2014/184560

(56) References cited:
- WO-A1-92/09444
- WO-A1-2009/062229
- WO-A1-2011/017749
- WO-A1-2011/116425
- AT-A1- 510 366

## Description

The present invention relates to security documents such as banknotes, currency, identification documents, passports, cheques, visas, certificates and the like, and methods for their manufacture. The invention relates particularly to such documents having polymer substrates, such as polymer banknotes, and the provision of security devices thereon, the security devices incorporating optically variable effect generating relief structures such as holograms, diffraction gratings, moire magnifiers, lenticular devices and similar.

Optically variable effect generating relief structures such as holograms and diffraction gratings have been used widely over the last few years to impart security to documents of value such as banknotes, credit cards, passports and the like. Conventionally, the structure is provided on a transfer foil and then hot stamped from the transfer foil onto the final document substrate. An early example of this approach is described in US-A-4728377. More recently, foils in the form of transparent strips have been applied to opaque substrates provided with one or more apertures therethrough and aligned with the strip so that regions of a security device disposed on the strip are revealed within transparent windows of the document, as described for example in EP-A-2077190 and CA-A-2163528.

Where the document substrate is itself polymeric, alternative methods for producing a security device on a security document can be employed, including the use of "cast-cure" resins. For instance, a hologram device may be formed in a "window" region of the document (defined by the absence of an opacifying layer) by applying a curable material to the polymer substrate and embossing the material with a desired relief structure. Simultaneously or subsequently, the material is cured, e.g. by exposure to UV radiation, in order to fix the relief structure. A metallic ink is then applied to the relief to provide a reflective layer, in order to render the optically variable effect visible. An example of such a method is disclosed in WO-A-2008/031170. Other examples of devices formed using similar techniques are disclosed in WO-A-2011/104551, WO-A-2011/116425, WO-A-2012/024718, WO-A-2012/027779 and WO-A-2010/099571.

Patent document WO 2011/017749 A1 discloses a security document having a polymersubstrate with window regions, an opacifying layer, and an optically variable security device.

There is a constant need to increase the security level of such security documents in order to deter counterfeiters.

In accordance with the present invention, a plurality of security documents is provided according to claim 1.

Known security documents having polymeric substrates, such as those mentioned above, have been provided with single window-located security devices. By providing each security document with a plurality of spaced window regions, each containing a different security device, the difficulty of counterfeiting the document is significantly increased thereby enhancing the security of the document. Previous polymeric security documents have been designed to emulate conventional paper-based document designs in which the provision of two different security devices each based on an optically variable effect generating relief structure is disadvantageous since this would require the application of two different foils, thereby significantly complicating the manufacturing process and slowing production time. However the present inventors have for the first time recognised that the different production technologies available for use on polymeric security documents, particularly cast-cure processes, can be adapted for the provision of multiple different relief-based security elements on one security document.

By "laterally spaced" it is meant that the two or more window regions are separated from one another in the plane of the document by an intervening area of higher opacity (due to the presence of at least one opacifying layer). The window regions could be connected to one another, e.g. by narrow channels in which the opacifying layer(s) are also absent, but at least some of the area between the window regions will have the opacifying layer(s) present. The window regions could take the form of closed "apertures", being substantially surrounded by areas of the document carrying an opacifying layer on all sides, or could take the form of "cut-outs", where the window region abuts one or more edges of the document. A mixture of apertures and cut-outs could be provided.

The different appearances of the security devices can be achieved by selecting any property of the security device which affects its appearance to be different in a first security device as compared with a second. It should be noted that the difference in appearance could be overt (i.e. visible to the naked eye), or covert (visible to the human eye only when viewed with assistance, e.g. under non-standard illumination such as non-visible wavelengths, for instance UV, or through a filter). The different appearance could alternatively be detectable only by a machine. However, overt differences in appearance are particularly beneficial since they can be observed without any special equipment. In preferred embodiments, the different appearance is a result of one or more of:
- different information content - for example, a first security device may display a first image (e.g. the letter "A") whilst a second security may display a second, different image (e.g. the letter "B"). The different information items could be related (e.g. conceptually linked) or not;
- different size of displayed information - for example, a first security device may display a magnified version of a certain image with one magnification factor, and a second security device may display a magnified version of the same image with a different magnification factor;
- different colour - for example, a first security device may display a certain image with a first colour range (of the reflected and/or diffracted light) and a second security device may display the same image but with a second, different colour range. The different "colours" could be visible or non-visible, e.g. a first device could be blue and another red, or a first device could be IR transparent and another IP absorbent. The devices could also have different patterns of colours; and/or
- different optically variable effect generating mechanism - for example, a first security device may comprise a hologram whilst a second security device may comprise a moiré magnifier. Alternatively, both security devices may be diffractive elements (e.g. holograms) but formed by different origination techniques so as to result in different appearance effects, such as classical two-step rainbow holography (i.e. optical interferometry) vs. electron-beam lithography. Optical interferometry can be used to create a diffuse-type replay whilst electron-beam lithography typically produces a non-diffuse or specular diffracting structure. "Specular reflection" is the perfect mirror like reflection of light from a surface, in which the light from a single incoming direction (a ray) is re-directed into a single outgoing direction. More particularly the incoming (incident) and outgoing (reflected) rays make the same angle with the surface normal (e.g. i=r). This is in contrast to "diffuse reflection", where the incoming light is redirected over a broad range of angles. Similarly, "specular diffraction" means that, for each diffraction order, each wavelength of light in an incoming ray is re-directed into a single outgoing direction, whilst in "diffuse diffraction", each wavelength will be redirected over a range of angles.

Hence in some embodiments, the security devices may be distinguished from one another through the use of different materials, visible colour additives or substances which are visible to a machine (for example), rather than differences in the structural configuration of the security device itself. However, in particularly preferred embodiments, the optically variable effect generating relief structures of the respective security devices are different. Formation of relief structures generally presents the greatest technological challenge to counterfeiters and hence the requirement for several different reliefs increases the security level of the document still further.

The two or more window regions could be arranged anywhere on the document. The present inventors have recognised that the technologies available for forming security devices on polymer substrates not only facilitate the provision of different security elements as described above but also provide complete design freedom in terms of their position. It is particularly preferable to arrange the multiple window regions and corresponding security devices in a manner which cannot easily be imitated using conventional foil-based techniques. In one preferred example, a pair of the window regions are located such that a straight line in the plane of the document between the two window regions forming the pair (e.g. a line joining the centre of each window region) is not parallel to any straight edge of the security document. It is not possible to produce this arrangement using a single foil strip element since the foil strip must generally lie parallel to the manufacturing line direction in order to be incorporated into documents on a web-based process. Instead, a separate foil would need to be introduced for each window, which would significantly complicate and lengthen the manufacturing process.

In another preferred example, the plurality of window regions comprises at least three window regions, the at least three window regions not lying on a straight line. Again, this cannot be achieved using a single foil strip element unless the foil is so wide as to cover all of the window regions laterally. This is not advantageous since the foil strip would then cover a disproportionate amount of the document. However the use of alternative manufacturing techniques available for use on polymeric substrates eliminates the need for foil elements and hence the three or more window regions can be widely spaced across the document without hindering manufacture or impairing the appearance of the finished document. This cannot readily be imitated and thus increases the security of the document. In preferred examples, a boundary connecting each of the window regions closest to the edges of the security document so as to contain all of the window regions therewithin has an area which is at least 15 %, preferably at least 30 %, more preferably at least 50 %, of the total document area.

The relief structures forming the security devices could be continuous, i.e. extending underneath an opacifying layer between the windows. However in preferred embodiments, the optically variable effect generating relief structures provided in adjacent window regions are discrete such that the relief is not continuous between window regions. The relief could extend a short distance outside the window regions (e.g. under the opacifying layer) but in particularly preferred embodiments is contained entirely within the window regions.

Most preferably, the respective relief structures are registered to one another such that their relative positions do not significantly change between one document and another of the same series. This can be achieved using a common cast-cure process to form the relief structures, as described further below, but is very difficult to imitate successfully using other means such as foils. This is particularly the case where the windows are arranged in a configuration which cannot be formed using a single foil strip element since achieving register between two or more individual foils (as would then be necessary) is extremely difficult.

The respective relief structures could be formed in the surface of the polymer substrate, e.g. embossed directly into the polymer substrate surface or a embossable layer provided thereon. However in particularly advantageous implementations, the respective relief structures are formed in a layer of curable material applied to the surface of the substrate, preferably by a cast-cure technique. Relief structures formed in this way are generally more robust, particularly in terms of withstanding high temperature conditions, and the use of an additional applied layer provides further flexibility in terms of the appearance of each device since the curable material can be differently coloured, for instance, in different window regions. The layer of curable material could continue between window regions, e.g. under an opacifying layer, but in preferred embodiments is discontinuous between window regions.

The relief structures are also, preferably, registered to the gaps in the opacifying layer(s) defining the window regions. In this way the security elements will appear in the same position relative to the edges of the window regions on each like document. This is especially difficult to counterfeit using conventional techniques since generally apertures will be made in a conventional substrate and foil elements applied in separate manufacturing processes.

The one or more opacifying layers can be provided on either side of the polymer substrate and the various window regions may also be defined on either or both sides. In some preferred examples, at least one of the opacifying layer(s) is provided on the first surface of the substrate and comprises gaps defining the plurality of window regions. That is, at least some of the window regions are defined by gaps in the opacifying layer on the same side of the substrate. Advantageously, the respective optically variable relief structures may also be disposed on the same surface of the substrate as one another, preferably on the first surface of the substrate. The second side of the substrate could have no opacifying layer but more preferably, another of the at least one opacifying layers is provided on the second surface of the substrate. This could be an all-over opacifying layer (resulting in the window regions taking the form of "half-windows" as described further below), but preferably the at least one opacifying layer provided on the second surface of the substrate includes one or more gaps. These gaps may also contain security devices comprising at least an optically variable effect generating relief structure disposed on the second surface of the substrate.

The gaps in the opacifying layer on the second surface could be positioned away from the gaps in the opacifying layer on the first surface, but preferably at least one of the window regions is a full window region, the at least one opacifying layer on the second surface of the substrate including a gap at least overlapping with one of the gaps in the at least one opacifying layer on the first surface of the substrate to form the full window region. In this case, advantageously, a respective security device is provided on both the first and the second surfaces of the substrate in the full window region, each security device comprising at least an optically variable effect generating relief structure. In particularly preferred embodiments, the relief structure of the security device on the first surface of the substrate and the relief structure of the security device on the second surface of the substrate are in register with one another.

With this arrangement, a particularly strong visual impact can be achieved where the security device on the first surface of the substrate and the security device on the second surface of the substrate comprise reflective or semi-reflective diffractive elements (e.g. holograms), and wherein preferably the security device on the first surface of the substrate is configured to exhibit a diffractive image of an object from a first viewpoint and the security device on the second surface of the substrate is configured to exhibit a diffractive image of the same object from a second viewpoint, preferably 180 degrees from the first viewpoint. This provides the effect of a single diffractive object which can be turned and observed from different positions by the viewer.

In other cases, as already mentioned, at least one of the window regions may be a half window region, the at least one opacifying layer on the second surface of the substrate overlapping the gap in the at least one opacifying layer on the first surface of the substrate to form the half window region. In a half window region the document will be translucent, relative to its surroundings, rather than transparent. Half windows are known from EP-A-0935535 for example.

The different security devices could also be provided on different sides of the security document. In some preferred examples, at least one of the opacifying layer(s) is provided on the first surface of the substrate and includes a gap defining a first window region and at least one of the opacifying layer(s) is provided on the second surface of the substrate and includes a gap defining a second window region, the optically variable relief structure in the first window region being disposed on the first surface of the substrate and the optically variable relief structure in the second window region being disposed on the second surface of the substrate. Here again, each window region may be a full window region or could be a half-window region.

The security devices could be of any types utilising a relief structure to generate an optically variable effect. "Optically variable" means that the appearance of the device is different at different viewing angles, so that it varies as the device is tilted.

One or more of the security devices could be a dual-sided security device, meaning that it exhibits an optically variable effect on both sides. Thus, assuming the substrate is transparent in the relevant window region, a single device (provided on one side of the substrate) can be used to provide secure visual effects which are visible from both sides of the document. Examples of suitable dual-sided devices and corresponding manufacturing methods are disclosed in our British Patent application numbers 1301788.4, 1301790.0 and 1301792.6.

Preferably, the security devices are configured such that at least two of the security devices in respective laterally spaced windows exhibit an optically variable effect which can be viewed from the same side of the document. This is advantageous since the visual effects can be viewed simultaneously alongside one another and compared, e.g. to check for accurate register between them. Depending on the construction of each security device, the devices may be applied to different sides of the device and yet exhibit optically variable effects visible from the same side.

In preferred embodiments, at least one of the security devices is a diffractive relief device such as a hologram, diffraction grating or Kinegram®, the optically variable effect generating relief structure defining a diffractive relief, and further comprises a layer of reflection enhancing material on the optically variable effect generating relief structure, the reflection enhancing layer following the contours of the relief. The reflection enhancing layer could take the form, for example, of a metal layer (typically vacuum deposited), reflective particle layer (e.g. metallic ink), or a high refractive index layer (again, typically vacuum deposited). To achieve different appearances, the colour of the reflection enhancing material and/or the material in which the relief structure is formed (e.g. curable material as mentioned above) can be selected as desired. The information content of the diffractive element can also be selected through appropriate formation of the relief itself. Alternatively (or additionally), different origination techniques may be used to achieve different replay effects (with the same or different information content). For instance, in a preferred embodiment, a first diffractive relief device may comprise a diffractive image generating structure adapted to have a diffuse diffractive replay or a diffractive image generating structure adapted to have a non-diffuse or specular diffractive replay, and a second diffractive relief device may be provided with the other. Various different origination technologies may be used including providing diffractive image generating structure(s) originated by any of: classical two-step rainbow holography, dot-matrix interferometry, lithographic interferometry or electron-beam lithography. Details of various suitable origination techniques are set out in EP-A-2152526 and EP-A-1490236.

In another embodiment, at least one of the security devices is a moiré magnifier device, the optically variable effect generating relief structure defining an array of micro-focusing elements, and further comprises an array of microimage elements disposed on the opposite surface of the substrate, wherein the pitches of the micro-focusing elements and the array of microimage elements and their relative locations are such that the array of micro-focusing elements cooperates with the array of microimage elements to generate a magnified version of the microimage elements due to the moire effect. The principles on which moiré magnifiers work, and examples of moiré magnifier devices, are described in US-A-6494491, WO-A-2011/107788, WO-A-2011/107791, WO-A-2011/107782 and WO-A-2011/107783.

In a still further embodiment, at least one of the security devices is a lenticular device, the optically variable effect generating relief structure defining an array of lenses, and further comprises an image pattern disposed on the opposite surface of the substrate, the image pattern preferably comprising elements of a first image and elements of a second image arranged such that when the lenticular device is viewed from a first angle, a focussed version of the first image is generated, and when the lenticular device is viewed from a second angle, a focussed version of the second image is generated. Examples of lenticular devices and the principles on which they operate are described in WO-A-2011051670.

In a yet further embodiment, at least one of the security devices is a prismatic device, the optically variable effect generating relief structure comprising a prismatic surface structure defining an array of substantially planar facets, forming a reflector due to total internal reflection when viewed at at least one first viewing angle and being transparent when viewed at at least one second, different, viewing angle. Examples of prismatic devices are disclosed in WO-A-2006095161, WO-A-2008029128 and WO-A-2011066991.

In a still further embodiment, at least one of the security devices comprises one or more lenses, preferably a Fresnel lens. Fresnel lens structures are well known in security devices as a structure used to create optically variable effects. For instance, they can be used to give the viewer a three-dimensional impression due to the variable refraction of light at different parts of the structured surface, see for example US20120187674. Fresnel lenses can be used in moiré magnfification devices, see for example WO2010136339. Fresnel lenses can also be employed to create lenticular type effects as is known in US20080191463. Fresnel lenses can be used as diffractive focussing elements, which provides the advantage that they are thinner than refractive equivalents, see for example WO2012048847A1 and WO2011116425A1.

The security document substrate could be monolithic or multi-layered and may comprise non-polymeric layers in addition to at least one polymer layer. For instance, the security document may be a hybrid paper/polymer composite document. Preferably, the substrate comprises a transparent polymer, such as polypropylene (PP), orientated polypropylene (OPP), biaxially orientated polypropylene (BOPP), polyethylene teraphthalate (PET), polyethylene, polyamide, polycarbonate, or polyethylene naphthalate (PEN).

The one or more opacifying layers could be formed in a number of ways such as laminating an opacifying sheet or film (e.g. paper or polymer) to the underlying substrate. However in preferred examples the opacifying layers comprise an opacifying coating, such as a binder containing a dispersion of coloured, e.g. white, particles, which is printed or otherwise applied to the substrate. Printing of the opacifying coating is particularly preferred since high register with other elements including the security elements can be achieved.

The disclosed constructions and methods are applicable to any document of value, and in preferred examples the security document is a banknote, a polymer banknote, a hybrid paper/polymer banknote, an identity document, a passport, an identification card, a cheque, a visa, a certificate, or a stamp.

The present invention provides a plurality of security documents each as described above, wherein respective relief structures on at least one surface of the substrate (preferably both) are in register with one another such that such that the relief structures have substantially the same position with respect to one another on each of the plurality of security documents. This can be achieved for example by forming the relief structures in one common cast-cure process so that the various relief structures are formed in the same embossing (or other forming) step. The resulting register between the reliefs is very difficult to emulate using conventional techniques.

Also provided by the present invention is a method of manufacturing a security document, according to claim 9.

As described above, the different appearances can be (for example) the result of one or more of: different information content; different size of displayed information; different colour; and/or different optically variable effect generating mechanism. In particularly preferred embodiments, the optically variable effect generating relief structures of the respective security devices are different.

The window regions and respective devices can be arranged on the document relative to one another in any of the configurations already described.

Preferably, in step (b) the respective relief structures are formed in register to one another. The relief structures may also, advantageously, be formed in register to the gaps defining the window regions in the at least one opacifying layer. This can be achieved by applying the opacifying layer(s) using a printing or coating technique in-line with the security device formation process.

As already mentioned, the security devices could be formed directly in the substrate, in which case step (b) may comprise forming the respective relief structures in the surface(s) of the polymer substrate. However, in particularly preferred embodiments, in step (b) each optically variable effect generating relief structure is formed using a cast-cure process comprising:
(b1) applying a layer of curable material to the first or second surface of the substrate within each window region;
(b2) forming the respective relief structures in the surface of the curable material; and
(b3) curing the curable material such that the respective relief structures are fixed;
wherein steps (b2) and (b3) may be performed simultaneously or sequentially.

Individual cast-cure processes each including steps (b1), (b2) and (b3) may be performed to form each of the security devices. However, preferably, a plurality of optically variable effect generating relief structures are formed in respective window regions on the same surface of the substrate using a common cast-cure process, preferably simultaneously. This method achieves accurate registration between the relief structures since they are formed together in the same process.

Within the common cast-cure process, the curable material could be applied to the various window regions in different steps. For example, curable material of a first colour could be applied to one window region in a first step, and curable material of a second colour could be applied to another window region in a second step. The application steps are preferably carried out in register with one another, e.g. in an in-line printing or other application process. However, for highly accurate register between the curable material regions it is preferred that, in step (b1) of the common cast-cure process, the curable material is applied to the same surface of the substrate within at least two window regions in a single application step, preferably a single printing step. Multiple different colours of curable material can still be applied in this way, e.g. by applying the different colours to a print roller or transfer blanket, from which the curable material is then transferred to the substrate.

Also preferably, in step (b2) of the common cast-cure process, the respective relief structures on the same surface of the substrate within at least two window regions are formed in a single forming step, preferably a single embossing step. The formation may not be simultaneous since embossing reliefs used to form the devices may be spaced about the circumference of an embossing roller, for example, in which case one device will be embossed before the next. However the two reliefs will inherently be registered to one another. High registration could alternatively be achieved by performing multiple in-line cast cure and embossing steps, but not to the same degree. Nonetheless this latter approach has the benefit of allowing different resins (e.g. resins of different colour) to be applied.

As mentioned above, the security devices could be carried on either or both sides of the substrate. In this case, preferably, a first common cast-cure process is used to form a plurality of optically variable effect generating relief structures on the first surface of the substrate and a second common cast-cure process is used to form a plurality of optically variable effect generating relief structures on the second surface of the substrate, the first and second common cast-cure processes preferably being performed in register with one another, most preferably in an in-line manufacturing process. The first and second common cast-cure processes could also be carried out simultaneously.

As previously discussed, the window regions could be defined by gaps in opacifying layer(s) on either or both sides of the substrate. In a preferred example, step (a) comprises applying at least one opacifying layer to the first surface of the substrate which comprises gaps defining the plurality of window regions. Preferably, in step (b) the respective optically variable relief structures are disposed on the same surface of the substrate as one another, preferably on the first surface of the substrate.

In other preferred embodiments, step (a) further comprises applying at least one opacifying layer to the second surface of the substrate. Advantageously, the at least one opacifying layer provided on the second surface of the substrate includes one or more gaps and step (b) preferably further comprises providing a security device on the second surface of the substrate by forming at least an optically variable effect generating relief structure on the second surface of the substrate.

The window regions could include full window regions and/or half window regions as discussed above, and where the window region is a full window region, security devices can be provided on both sides of the substrate in the same window as previously mentioned.

In some preferred embodiments, step (a) comprises applying at least one opacifying layer to the first surface of the substrate, including a gap defining a first window region and applying at least one opacifying layer to the second surface of the substrate, including a gap defining a second window region, and step (b) comprises providing an optically variable relief structure in the first window region on the first surface of the substrate and an optically variable relief structure in the second window region on the second surface of the substrate. The application steps could be carried out simultaneously or in any order. For example, steps (a) and (b) could be performed on the first surface of the substrate and then on the second surface. Again, "full window" regions and/or "half window" regions could be formed.

The various security devices could take any of the forms already discussed. For example, where at least one of the security devices is a diffractive relief device such as a hologram, diffraction grating or Kinegram®, the optically variable effect generating relief structure defining a diffractive relief, the method preferably further comprises
(c) applying a layer of reflection enhancing material onto the optically variable effect generating relief structure, the reflection enhancing layer following the contours of the relief. The reflection enhancing material could be a metal layer, reflective particle ink, HRI material or thin film structure for instance.

Where at least one of the security devices is a moiré magnifier device, the optically variable effect generating relief structure defining an array of micro-focusing elements, the method preferably further comprises
(d) providing an array of microimage elements on the opposite surface of the substrate, wherein the pitches of the micro-focusing elements and the array of microimage elements and their relative locations are such that the array of micro-focusing elements cooperates with the array of microimage elements to generate a magnified version of the microimage elements due to the moiré effect.

Where at least one of the security devices is a lenticular device, the optically variable effect generating relief structure defining an array of lenses, the method preferably further comprises
(f) providing an image pattern disposed on the opposite surface of the substrate, the image pattern preferably comprising elements of a first image and elements of a second image arranged such that when the lenticular device is viewed from a first angle, a focussed version of the first image is generated, and when the lenticular device is viewed from a second angle, a focussed version of the second image is generated.

The production method could be carried out on individual document substrates or in a batchwise process, but most preferably is performed on a continuous web of substrate material. Hence, in preferred implementations, the method further comprises cutting the substrate into individual security documents each carrying at least two of the (laterally spaced) window regions.

Examples of security documents and their methods of manufacture will now be described with reference to the accompanying drawings, in which:-
Figure 1 shows a first embodiment of a security document, Figure 1 a showing the document in plan view and Figures 1b, 1c, 1d and 1e showing alternative cross-sectional structures of the document along line A to A';
Figure 2 shows a second embodiment of a security document, Figure 2a showing the document in plan view and Figures 2b, 2c and 2d showing alternative cross-sectional structures of the document along line B to B';
Figure 3 shows a third embodiment of a security device, in plan view;
Figure 4 shows a fourth embodiment of a security document, Figure 4a showing the document in plan view, and Figures 4b and 4c showing alternative cross-sectional structures of the document along line C to C';
Figures 5a, 5b and 5c show three further embodiments of security documents in plan view;
Figures 6 and 7 show two further embodiments of security documents in cross-section;
Figure 8 shows a further embodiment of a security document, Figure 8a showing the security document in plan view, Figure 8b showing a security device on the reverse side of the document and Figure 8c showing the document in cross-section along the line D to D';
Figure 9 schematically illustrates components of a manufacturing apparatus in the production of a security document according to a further embodiment;
Figures 10a to 10e, show an embodiment of a security document in cross-section at various stages during its manufacture according to an exemplary manufacturing method;
Figure 11 and 12 depict two further embodiments of exemplary apparatus for manufacturing security documents;
Figure 13 depicts a further embodiment of a security document, Figure 13a showing the document in plan view and Figure 13b showing the document in cross-section along the line E to E'; and
Figures 14, 15 and 16 show three further embodiments of security documents in cross-section.

The present description will focus on security documents in the form of banknotes, but it will be appreciated that the invention is applicable to any type of security document, including other sheet-like documents such as certificates, cheques, visas, passports, stamps etc. and also card-type documents such as identification cards, driving licences and security passes. In all cases, the security document comprises a polymeric substrate which is preferably at least semi-transparent (e.g. translucent). Most preferably, the substrate is transparent, that is to say clear, although a coloured tint may be carried. The substrate may comprise a single layer or could be multi-layered, e.g. comprising a core support layer and one or more outer layers whose properties are selected for functions such as embossing or scuff protection. The multiple layers could comprise different polymer compositions and/or non-polymeric layers such as paper. Thus, the invention is also applicable to hybrid polymer/paper composite documents.

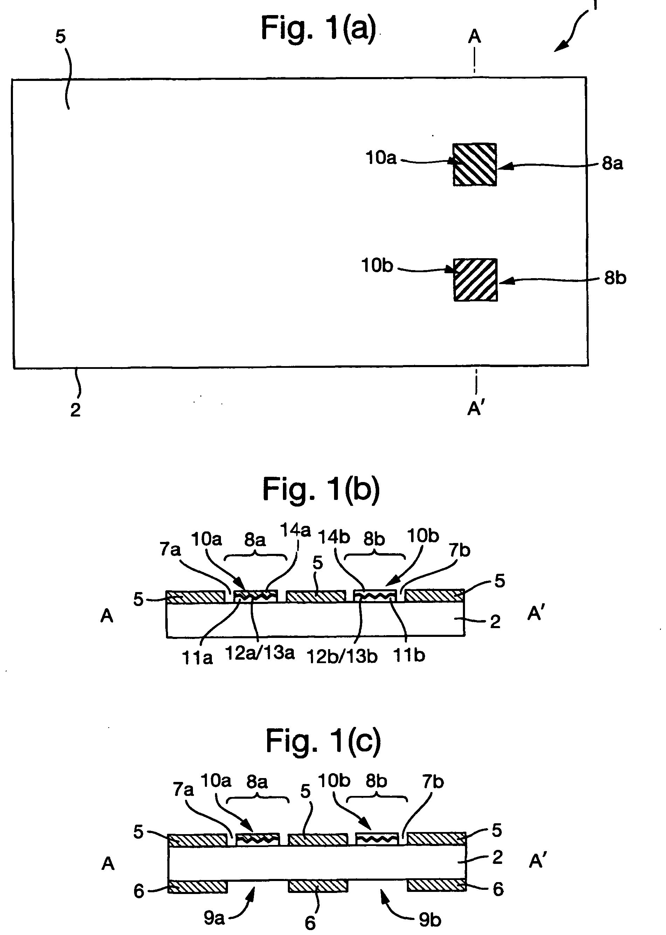

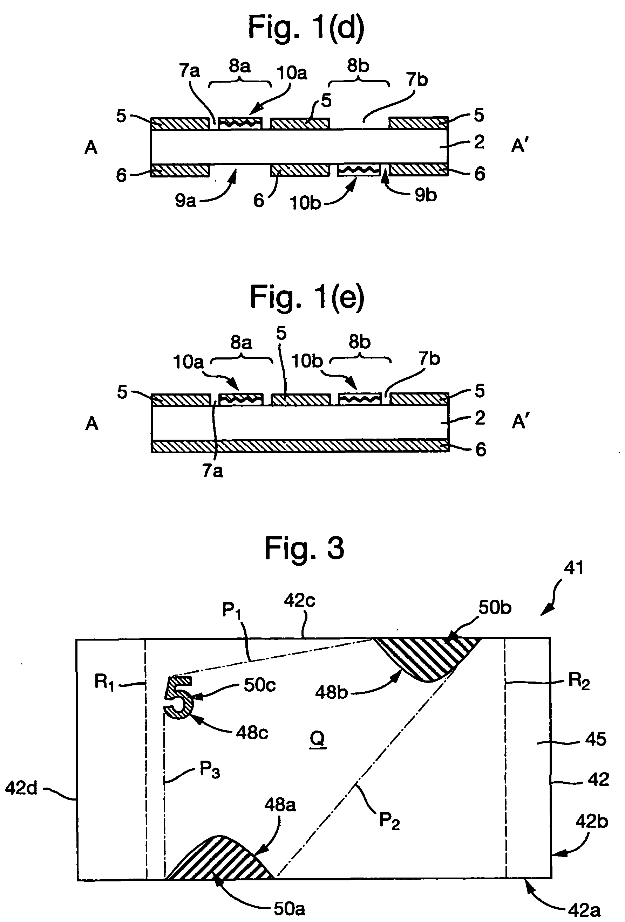

In a first embodiment, as shown in Figure 1, a security document 1 comprises a substrate 2 having two window regions 8a and 8b defined thereon. Each window region 8a and 8b has therein a respective security device 10a and 10b. The security devices 10a and 10b are configured so as to give rise to optically variable effects with different appearances from one another. "Optically variable" means that the appearance of the security device is different at different viewing angles, such that, as the document is tilted, the appearance of the security device appears to change. In the present example, both security devices 10a and 10b are diffractive elements such as holograms, although any other type of optically variable security device based on a relief structure could be used, as discussed further below.

Figures 1b, 1c, 1d and 1e show four alternative structures of the document 1 which will have substantially the same appearance in plan view as that shown in Figure 1a. In Figure 1b, it can be seen that the window regions 8a and 8b are defined by gaps 7a and 7b in an opacifying layer 5 provided on the upper surface of substrate 2. The opacifying layer 5 could be formed for example of a polymeric layer carrying a dispersion of substantially opaque pigment or particles, e.g. titanium oxide. Alternatively, the opacifying layer could comprise some other relatively opaque material, such as paper. The opacifying layer can be applied to the substrate 2 by printing or coating techniques, or by lamination for example. In this instance, no opacifying layer is provided on the underside of substrate 2 and hence the two window regions 8a and 8b are "full window" regions meaning that, assuming the substrate 2 is transparent, the user can see through the document in these regions. The opacifying layer(s) act to provide a background for receipt of printed graphics onto the document, e.g. background prints, security prints (e.g. guilloches) and/or individualising prints as are typically found on security documents such as serial numbers or owner information. The opacifying layer(s) may be multi-layered and could include a primer as the outermost surface for good print adhesion.

The opacifying layer 5 delimits and separates the two window regions 8a, 8b from one another such that they are laterally spaced. In this case, as seen best in the plan view, the opacifying layer 5 completely surrounds each window region. However this is not essential and in other cases the window regions could be "joined" by one or more channels along which the opacifying material is also absent. Nonetheless in all cases, opacifying material is present between the two window regions so as to define and space the window regions from one another. Preferably the distance by which the windows are spaced is of approximately the same order of magnitude as the window dimensions (e.g. window diameter or edge length), so that the separation between the windows is clear to the naked eye. For example, the spacing may be between 0.1 and 30 times the relevant window diameter. In the present example the spacing is about 0.25 times the edge length of the two window regions. Preferably, each window has a diameter or edge length of 4 to 5 mm or more.

Within each of the window regions 8a and 8b, a security device 10a and 10b is disposed on the upper surface of the substrate 2. In this example, each security device 10a and 10b comprises a layer of material 11 a, 11 b applied to the surface of substrate 2 and into which a relief structure 12a, 12b has been formed. The relief structures may each define a diffractive device such as a hologram, diffraction grating or kinogram and may be formed using any suitable origination technique such as classical two-step rainbow holography or electron beam lithography. The diffraction structures are rendered visible by providing a reflection enhancing layer 13a, 13b which conforms to the relief, such as a metal layer, metallic ink or a high refractive index material such as zinc sulphide. Depending on the nature of the reflective layer and the manner in which is applied, the reflective material may conform to the relief on one or both of its sides. If the reflective material conforms only to the surface relief at its interface with material 11 a, 11 b, the diffractive visual effect may only be visible from the underside of the document (i.e. through substrate 2 and material 11 a, 11 b), whereas if the reflective layer conforms to the relief on both of its sides, the diffractive visual effect may be visible from both sides of the document (or from the upper side only, if either the substrate 2 or curable material 11a, 11b is non-transparent). In this example, a protective layer 14a, 14b is provided over the reflection enhancing layer 13a, 13b and in case of layer 14a in security device 10a, this contains a coloured tint through which the optically variable effect remains visible but takes on the colour of the tint.

The second security device 10b is of substantially the same construction as that already described, comprising material 11 b in which relief structure 12b is formed and made visible by reflective layer 13b. Again, a protective layer 14b is provided over the top. The second security device 10b is configured to have a different appearance to that of the first security device 10a and this could be achieved in a number of ways. The difference in appearance is preferably, but not essentially, overt (i.e. visible to the naked eye). In this example, the relief structure 12b is identical to the relief structure 12a of the first security device and hence the information content of the two security devices 10a and 10b will be the same. For example, where both devices are holograms, both will exhibit the same holographic replay image. However, in the present case, the protective layer 14a of the first security device 10a is tinted with a colour whilst the protective layer 14b of the second security device 10b is not, which will result in different colour appearances of the two devices. Different colour appearances could also be achieved by using different reflection enhancing materials to form layers 13a and 13b, e.g. aluminium and copper, and/or by using different coloured materials 11a, 11b in which the relief structures are formed. It is also possible to form patterns by utilising two or more different materials in combination to form any one of these layers. For example, the curable material 11 a, 11 b could be made up of regions of different coloured curable material arranged to form a pattern, or similarly the reflection enhancing layer 13a, 13b could be formed of a pattern of different metals or other reflective materials (as in EP-A-1294576 for example), or the protective layer 14a, 14b could exhibit such a pattern. Any combination of these effects could be implemented.

In all cases, the term "colours" herein encompasses both colours which are visible to the human eye, i.e. colours of the visible spectrum such as red, green etc., and also colours outside the visible spectrum such as IR or UV which are visible only to a machine. Any of the layers could also or alternatively incorporate substances which create a different "appearance" only under certain conditions, e.g. luminescent, phosphorescent or fluorescent substances such as those which become visible only when illuminated with certain non-visible wavelengths such as UV. Thermoluminescent or electroluminescent substances could also be used.

As already mentioned, in other examples the relief structures 12a and 12b themselves may be different from one another in which case the information content displayed by each device may be different or at least possess different appearance characteristics (e.g. diffuse vs specular replay). Thus, in one example the first security device 10a may exhibit a first holographic image (e.g. of the letter "A"), whilst the second security device 10b may exhibit a second, different holographic image (e.g. of the number "5"). Alternatively, both security devices may exhibit the same image (e.g. the letter "A"), but the first security device 10a may be formed based on optical interferometry to result in a diffuse replay whilst the second security device 10b may be formed based on electron beam lithography to produce a non-diffuse or specular diffracting structure.

Any combination of these factors could be varied between the devices in order to achieve the different appearances.

The Figure 1c construction is substantially the same as that already described with respect to Figure 1b, save for the addition of a second opacifying layer 6 on the underside of the substrate 2. This may be preferred in order that printed graphics can be applied over the opacifying layers on both sides of the document. In preference there are typically two or three layers of opacifying material on both sides of the substrate. As in the Figure 1b example, both window regions 8a and 8b are full window regions and in order to achieve this, the second opacifying layer 6 includes gaps 9a and 9b which at least partially overlap with the gaps 7a and 7b in the first opacifying layer 5. In this case, the respective gaps are fully aligned. The second opacifying layer 6 can be formed using any of the techniques already mentioned for formation of the first opacifying layer 5.

The arrangement shown in Figure 1d is substantially the same as that just described with respect to Figure 1c, but here the second security element 10b is applied to the underneath surface of the substrate 2 such that the two security devices are provided on opposite sides of the substrate (both remain laterally spaced from one another by the opacifying layer(s)). Again, the optically variable effect exhibited by each security device 10a and 10b may be visible from either or both sides of the document.

Figure 1e shows another alternative construction in which the components on the upper surface of substrate 2 have substantially the same arrangement as discussed with respect to Figures 1b and 1 c. However, in this example the second opacifying layer 6 on the underside of substrate 2 extends across the full area of the security document, including window regions 8a and 8b. Thus, window regions 8a and 8b are "half windows" which, whilst not transparent, will be of lower opacity than their surroundings due to the gaps 7a and 7b. Since the security devices 10a and 10b will no longer be visible from the underside of the security document, in this case both devices 10a and 10b must be configured so that their respective optically variable effects can be viewed from the upper side of the document.

In each of the above described constructions, it is strongly preferred that the respective relief structures 12a and 12b of the security devices 10a and 10b are registered to one another and examples of suitable techniques by which this may be achieved will be discussed below. It is also preferred that the relief structures are registered to the gaps in the opacifying layers which define the window regions 8a and 8b. Achieving register between the various components means that the position of the security devices and the gaps will be reliably and accurately replicated on each of a plurality of like security documents, which increases the difficulty of counterfeiting.

By providing two optically variable security devices in laterally spaced window regions in this way, the difficulty of producing a replica document is significantly enhanced since the counterfeiter must match the appearance of multiple security devices each of complex construction. The combination of multiple different security devices on one document in this way leads to a disproportionality large increase in counterfeiting difficulty, since different imitation devices must be perfected on the same document and, in preferred embodiments, in accurate register with one another.

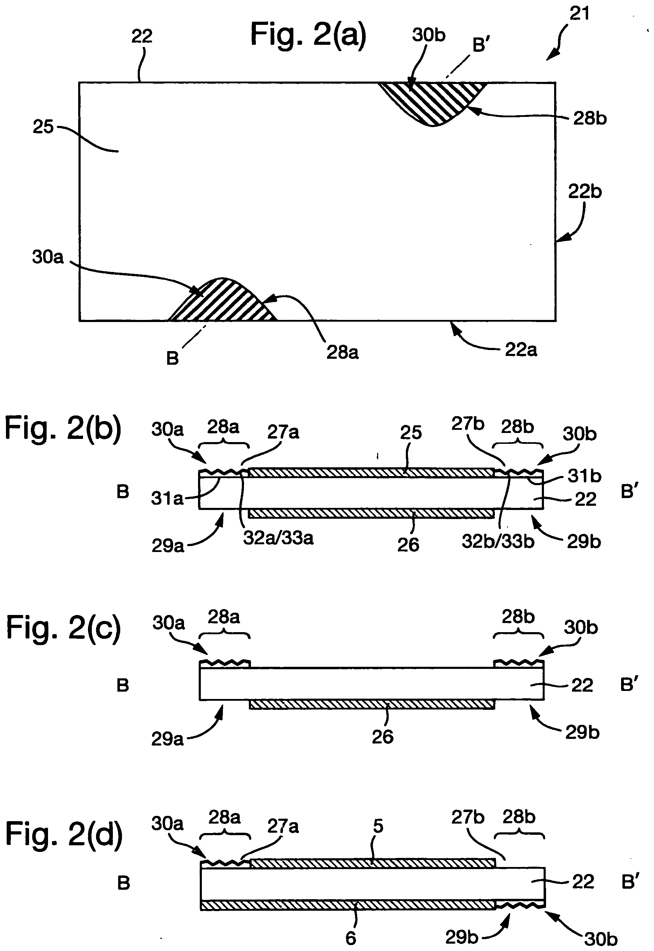

In the Figure 1 example, the two window regions 8a, 8b are aligned along a straight line which is parallel to an edge of the document 1, which may be desirable in order to emulate conventional banknote designs in which security devices are provided using a laminated foil strip element, as previously discussed. Using such techniques, the strip element can only be inserted along a direction parallel to one of the document's edges. However, the present invention lends itself to alternative configurations which are highly distinctive and cannot be imitated using conventional means. Figure 2 shows an example of this where the security document 21 is provided with two window regions 28a and 28b which are arranged belong a straight line (approximated by the line B to B') which is not parallel to either document edge: i.e. the line joining the centres of the two window regions makes a non-zero angle with the long and short document edges 22a and 22b. Such an arrangement would be extremely difficult to imitate using a single conventional foil strip, since the foil strip would need to run parallel to one of the document edges. As such, in order to extend over both window regions 28a and 28b, the foil strip would need to be so wide as to cover substantially the whole document 21.

It will also be noted that, in contrast to the first embodiment, in the Figure 2 example the window regions 28a and 28b abut edges of the document such that they constitute "cut-outs" rather than complete apertures. Thus, the window regions are not surrounded on all sides by opacifying material 25, but only on the sides facing the document interior. Any combination of cut-outs and/or apertures could be used in practice.

Figures 2b, 2c and 2d depict cross-sectional views of three alternate constructions of the document 21 along the line B to B'. Again, in these examples, the security elements 30a and 30b provided within each window region 28a, 28b are depicted as diffractive devices, but this is not essential and any other type of optically variable device incorporating a relief structure could be used. In the embodiment shown in Figure 2b, the window regions 28a and 28b are "full window" regions, defined by gaps 27a and 27b in first opacifying layer 25 applied to the upper surface of substrate 22 and corresponding gaps 29a and 29b in second opacifying layer 26 applied to its lower surface. The opacifying layers can be formed in the same way as in the first embodiment. The security devices 30a and 30b are applied inside the gaps 27a and 27b to the upper surface of substrate 22 and are of a similar construction to the security devices discussed with respect to the first embodiment. Thus, each security device 30a, 30b comprises a layer of material 31a and 31b into which a relief structure 32a and 32b has been formed and a reflection enhancing layer 33a and 33b applied. In this example, no protective cover layer is shown although this typically would be present. In this example, the colour of the two security devices 30a and 30b is the same, but the relief structures 32a and 32b differ from one another such that the information content displayed by each device is different. For example, the first device 30a may replay a first image such as a number or symbol relating to the currency or denomination of the document and the second security element 30b may replay a second, different image relating to the country of issue, such as a national flag, emblem or monument. Alternatively, the different reliefs could represent the same information content but result from different origination techniques, leading to different replay characteristics such as diffuse versus specular as mentioned above. As before, each security device 30a and 30b may be viewable from either or both sides of the security document.

In the Figure 2c example, the appearance of the document in plan view will be much the same as that depicted in Figure 2a, but in this case a single opacifying layer 26 is provided on the underneath surface of substrate 22 whilst the security devices 30a and 30b remain in the window regions 28a and 28b on the upper surface of substrate 22. This arrangement may be suitable, for example, where in use the document will only be viewed from the underside such that no printing is required on the upper side of the substrate. In such cases it would be preferred that the optically variable effect of each security device 30a and 30b is also visible from the underside of the document.

In the example depicted in Figure 2d, the first window region 28a is now a "half window", with second opacifying layer 6 on the underside of the substrate 22 extending across its area. As such, here the security device 30a must be configured such that the optically variable effect is visible from the upper side of the document. In the second window region 28b, in this example the second security device 30b is disposed in a gap 29b in the second opacifying layer on the underneath surface of substrate 22 aligned with gap 27b in the first opacifying layer 25 such that window region 28b is a "full window". The security device 30b may be visible from either or both sides of the document.

As in the case of the first embodiment, in each of the Figure 2b, c and d embodiments, the relief structures 32a, 32b are preferably produced in register to one another and this is particularly the case where the optically variable effects of each are visible from the same side. Exemplary methods for achieving this are provided below. It is also preferred that the relief structures are registered to the opacifying layer(s).

Figure 3 shows a third embodiment of a security document 41 which is of substantially the same construction as that discussed with respect of Figure 2 but additionally incorporates a third window region 48c with a corresponding security device 50c. It will be appreciated that any number of window regions and corresponding security devices could be provided on the document. In this example, the third window region 48c is in the shape of the digit "5", but each window region could have any shape as already illustrated by the geometric shapes used in Figure 1 embodiment (here, rectangles), or irregular shapes used in the Figure 2 embodiment. Each window could also depict information by virtue of its shape such as a symbol, letter or number as in the case of window 48c in Figure 3.

The arrangement depicted in Figure 3 provides further advantages by providing three windows 48a, 48b and 48c which do not align along a straight line. That is, a straight line joining two of the windows (e.g. 48a and 48b) for example will not intersect the third window (e.g. 48c). This again is extremely difficult to emulate using conventional foil strip methods unless an extremely wide strip were to be utilised. For comparison, the dashed lines R₁ and R₂ annotated on Figure 3 denote the approximate edges of a hypothetical strip element that would be necessary to extend over all three window regions using conventional techniques. It will be seen that the strip (lying between lines R₁ and R₂) would extend over the vast majority of the document.

Thus, to increase the difficulty of emulating a design using conventional techniques, it is preferred that the plurality of window regions are spaced over a significant proportion of the document. For instance, it is advantageous if the distance from one side of the window region closest to a first edge of the document 42a (here, the straight edge of window region 48a) is spaced in a direction parallel to an edge of the note (here, edge 42b) from the furthest side of the window region closest to the opposite edge of the note (here, edge 42c) by at least 25%, more preferably at least 50%, of the distance between those two opposite edges 42a and 42c. In this example, the extreme edges of the two window regions in question (48a and 48b) are spaced by 100% of the relevant note dimension. Similarly, it is preferred that the same considerations apply in the perpendicular direction between the two remaining note edges and here the distance in question is between the extreme left hand side of window regions 48a and 48c (since these are vertically aligned) and the extreme right hand point of window 48b, in the direction parallel to long note edge 42a.

More generally, where three or more window regions are provided, it is preferred that the area Q included within a hypothetical boundary joining the extremes of the window regions closest to the edges of the document (here depicted by broken lines P₁, P₂ and P₃) is at least 20%, preferably at least 35%, more preferably at least 50%, of the total area of the document.

In the Figure 3 embodiment, the security devices 50a and 50b are diffractive devices of the same sort as discussed with respect to security devices 30a and 30b in the Figure 2 embodiment. The security device 50c may be a further diffractive element or could comprise any other type of optically variable security device comprising a surface relief. Similarly, the window region 48c could be a half window or full window depending on the coverage of opacifying layer 45 and its counterpart on the opposite side of the document (not shown). Thus, the various security devices provided in the window regions of the document can be a mixture of different types.

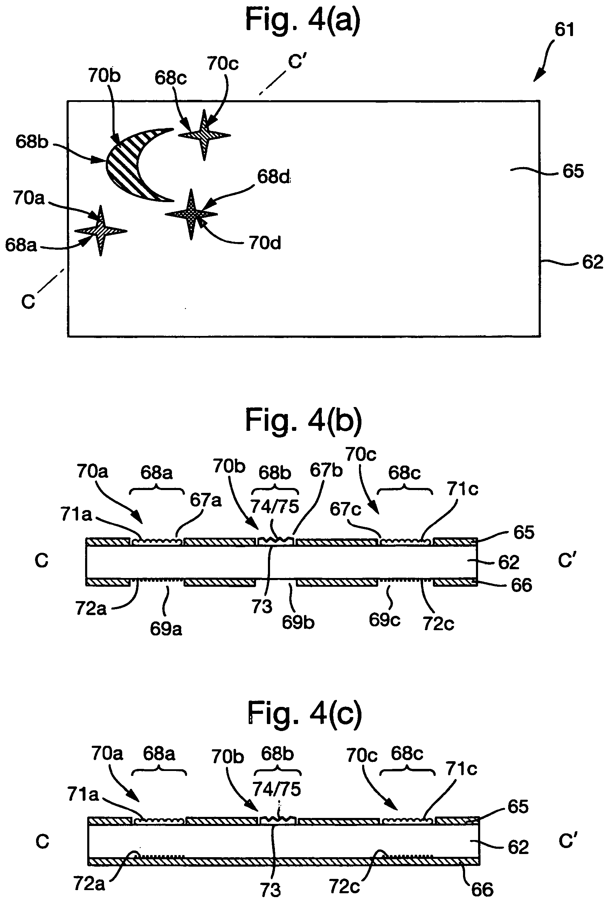

Figure 4 illustrates a fourth embodiment which shows such an example in more detail. Here, the document 61 is provided with four window regions 68a, 68b, 68c and 68d, as shown in the plan view of Figure 4a. Each of the window regions is provided with a respective security device and in this example the crescent-shaped region 68b comprises a diffractive security device 70b, whilst each of the star-shaped window regions 68a, 68c and 68d comprise moire magnifier devices 70a, 70c and 70d.

Two alternative constructions, each having substantially the same appearance in plan view as shown in Figure 4a, are depicted in cross-section along line C to C' in Figures 4b and 4c.

In the Figure 4b example, the window regions 68a, 68b and 68c are full window regions defined by gaps 67a, 67b and 67c in a first opacifying layer 65 provided on the upper surface of substrate 62 and aligned gaps 69a, 69b and 69c provided in a second opacifying layer 66 disposed on the underneath surface of substrate 62. Window region 68d (not shown in Figure 4b since it does not sit on the line C-C') has substantially the same construction. Within window regions 68a and 68c, moiré magnifier devices 70a and 70c are provided. With reference to device 70a, each moiré magnifier device comprises an array of focusing elements 71a, such as spherical lenses, disposed on the upper surface of substrate 62 in the window region. Each lens array can be formed by applying a material to the surface of the substrate 62 and forming a surface relief into the material which defines the array of lenses. On the opposite side of the substrate 62 (which must be transparent in this case), an array of microimage elements 72a is provided, e.g. by printing onto or etching into the substrate 62. The lens array 71a and microimage array 72a are mismatched with respect to one another in terms of their pitch and/or rotational offset. This gives rise to the generation of a magnified version of the microimage array which is exhibited to a viewer observing the upper surface of the document. Further details as to the principles of operation of moiré magnifier devices and examples of their construction can be found in US-A-6494491, WO-A-2011/107788, WO-A-2011/107791, WO-A-2011/107782 and WO-A-2011/107783. Any of the devices disclosed therein could be utilised as the security devices 70a or 70c.

The security device 70b in crescent-shaped window 68b is a diffractive device such as a hologram, kinegram or diffraction grating and has substantially the same construction as the devices 10a, 10b, 30a or 30b discussed in previous embodiments. Thus, a material 73 is applied to the upper surface of substrate 62 and a relief 74 is formed therein and made visible by the application of reflection enhancing material layer 75. In this example, the security element 70b is disposed on the upper surface of substrate 62 but in other examples the security device could be disposed on the opposite surface of the substrate 62 in the window 68b. The optically variable effect exhibited by the security element 70b could be visible from either or both sides of the document but preferably it is visible from at least the upper side of the document so that it can be viewed simultaneously with the optically variable effect generated by the moiré magnifier devices 70a and 70c.

The alternative construction of document 61 shown in Figure 4c is substantially the same as that discussed with respect to Figure 4b but here, the three windows 68a, 68b and 68c are half windows with the second opacifying layer 66 extending across each of them. The fourth window region 68d (not shown in Figure 4c) could be a half window region or a full window region. In the window regions 68a and 68c, the opacifying layer 66 extends over the top of microimage element arrays 72a and 72c and as such it is necessary to ensure that there is sufficient contrast between the colour of the microimage elements and that of opacifying layer 66.

As in the previous embodiments, it is preferred that the relief structures 71a, 71c and 74 are produced in register to one another and methods by which this can be achieved are exemplified below. The microimage arrays 72a, 72c are preferably also registered to one another and may or may not be registered to the relief structures.

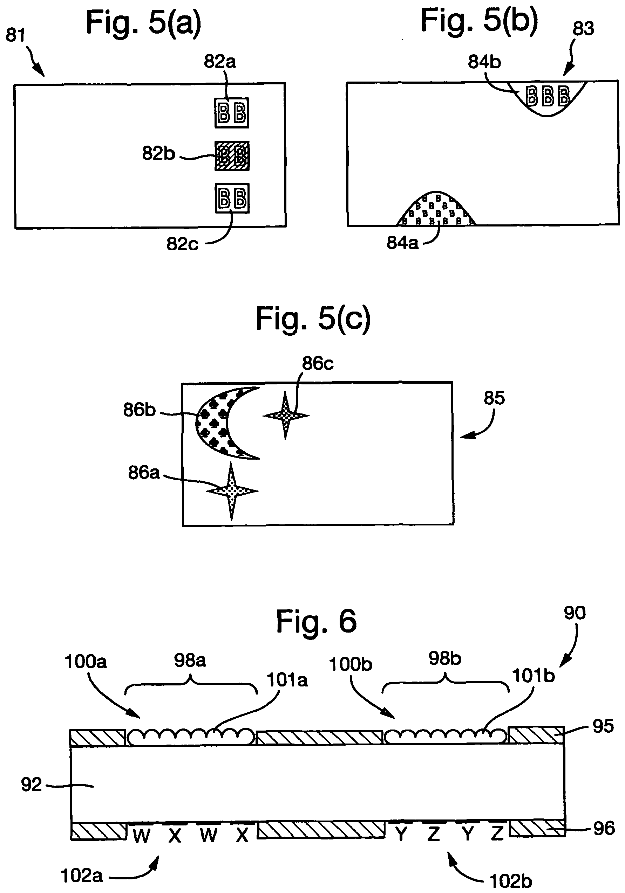

In the Figure 4 embodiment, since the diffractive security device 70d will inherently be of a difference appearance to the moiré magnifier security devices 70a, 70c and 70d, all three of the moiré magnifier security devices 70a, 70c and 70d could share the same appearance. Alternatively, as depicted in Figure 4a, the appearances of the moiré magnifier devices could also vary from one to the other. Several options are available for achieving different appearances using moiré magnifier devices and some examples will be depicted with respect to Figure 5 which shows three schematic security documents each provided with a number of moiré magnifier security devices. In Figure 5a, the security document 81 is provided with three security devices 82a, 82b and 82c in corresponding window regions. In this case, the information content and size of the image displayed by each of the security devices is identical, but whilst security devices 82a and 82c are of a first colour, security device 82b is of a second, different colour. Different colour effects can be achieved in a moiré magnifier device by selection of the colour in which the microimage elements are generated (e.g. the colour of microimage array 72a in Figure 4b embodiment), and/or any coloured tint contained in the focusing element array (e.g. lens array 71a in the Figure 4b embodiment). A colour pattern could also be provided by forming each layer of material in which a lens array is formed of regions of different coloured materials. The lens array and microimage array are otherwise identical in each of the three security devices 82a, 82b and 82c.

In Figure 5b, the security document 83 is provided with two window regions 84a and 84b having corresponding security devices. Here, both moiré magnifier security devices exhibit images with the same information content (an array of the letter "B"), but at different magnifications. The magnification level of a moiré magnifier device can be selected through adjustment of the mismatch between the lens array and the microimage element array as described in the documents referenced above. The magnification level is also related to the apparent position of the plane in which the magnified image is formed relative to the plane of the document. This image plane can appear to sit in front of or behind the document plane and, in a preferred example, one of the security devices 84a may exhibit an image plane appearing in front of the document whilst the other device 84b may exhibit an image plane appearing behind the document.

Another factor which may be used to differentiate between moiré magnifier security devices is the information content of the displayed image itself, and an example of this is shown in Figure 5c. In this case, the security document 85 is provided with three window regions 86a, 86b and 86c and corresponding security devices. Star-shaped regions 86a and 86c are formed with microimage arrays depicting arrays of dot symbols whereas crescent-shaped region 86b is formed with a microimage array depicting a series of club symbols. As illustrated in Figure 5, both the image content and magnification level may also be altered between devices; for example here the star-shaped microimages of device 86a are magnified only by a small factor whereas the club symbols of security device 86b are magnified to a greater extent.

In a still further example, the devices may be distinguished by virtue of their motion characteristics. For example, one device may exhibit conventional parallax movement (i.e. motion along the same direction as that in which the device is tilted, that is perpendicular to the tilt axis) whereas the other device may exhibit ortho-parallactic movement (i.e. motion along the perpendicular direction to that in which tilt occurs, e.g. left/right tilt may produce up/down motion). In yet another alternative, in one device the image may appear to be located behind the substrate plane and in the other above the substrate plane.

Any combination of the factors discussed above can be used in combination to distinguish one moiré magnifier security device from another.

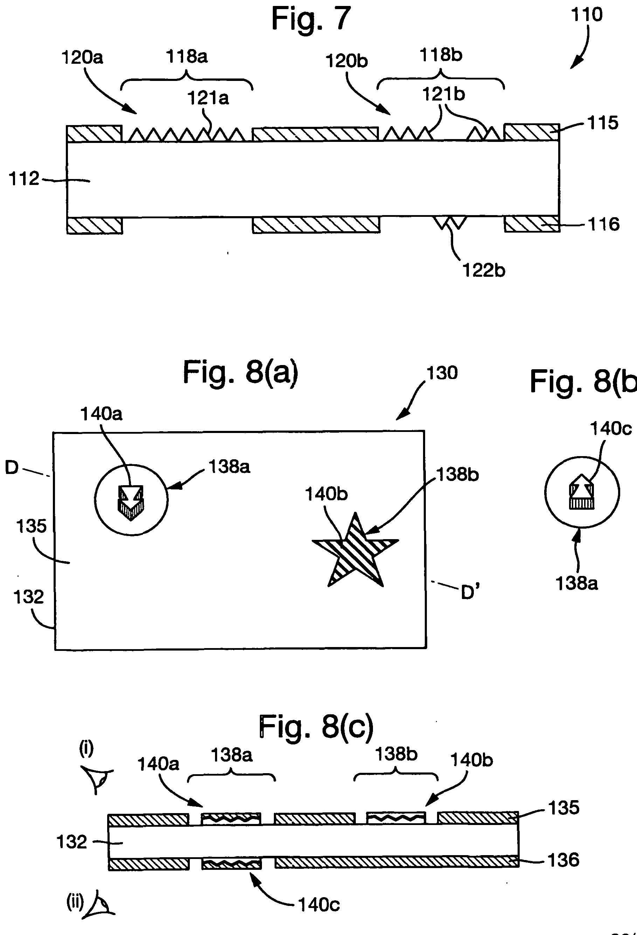

In the above embodiments, the security devices comprise diffractive devices such as holograms, diffraction gratings or kinegrams, and moiré magnifiers. However, any security device which utilises a relief structure in order to generate an optically variable visual effect could be deployed in the window regions. Figures 6 and 7 show examples of two further security documents utilising different types of security device.

The security document 90 depicted in cross-section in Figure 6 has two window regions 98a and 98b each containing a security device 100a, 100b in the form of a lenticular device. The principles on which lenticular devices operate are described in WO-A-2011/051670, which also gives examples of suitable device constructions. Each security device 100a, 100b, comprises an array of lenses 101a, 101b disposed on the upper surface of substrate 92 and an opposing series of image elements 102a, 102b. The lens array 101 a, 101b may comprise for example a linear arrangement of cylindrical lenses (the long axes parallel to the normal of the page). The image element array 102a, 102b typically comprises a series of interleaved sections of two or more images. In this example, the image array 102a of security device 100 comprises interleaved slices of two images "W" and "X", whilst the image element array 102b of security device 100b comprises interleaved slices of two different images, "Y" and "Z". When each security device 100a and 100b is viewed at a first angle from the upper side of the document, the series of lenses 101 a, 101 b focuses selected image slices from the respective image element array 102a, 102b to produce a composite of one of the images (e.g. of image "W" in the case of security device 100a). When the viewing angle is changed, different portions of the image element array 102a, 102b are focused by the array of lenses to produce a different composite image (e.g. of image X in the case of security device 100a). Thus, as the device is titled, the appearance of security device 100a appears to change from that of image W to that of image X and at the same time the appearance of security device 100b appears to change from that of image Y to that of image Z. Of course, a different number of images could be used which may for example be configured to give the impression of animation as the device is tilted.

In this example, the appearance of devices 100a and 100b is distinguished through the use of different images making up each of the image element arrays 102a and 102b. However, this is not essential and in other examples the image element arrays could be identical with the appearance of the device altered by modification of the corresponding lens array 101 a or 101b, for example to incorporate a coloured tint or to utilise lenses of different magnification level such that the generated image is of a different size. In another case, the image element arrays 102a and 102b could be made up of the same interleaved images but in a different order or position relative to the lenses such that, for example, at one angle of tilt, security device 100a shows a composite version of image W, whilst security device 100b shows a composite image of image X and, at a second viewing angle, the images appear to swap such that security device 100a exhibits a composite version of image X and security device 100b exhibits a composite version of version W. The image element arrays 102a and 102b could also be formed in different colours from one another.

The lens arrays 101a and 101b can be formed in a similar manner to the lens arrays or other relief structures previously discussed, by applying a suitable transparent material to the upper surface of substrate 92 and forming an appropriate relief structure defining the desired lenses into the material, as will be discussed further below. The image element arrays 102a and 102b can be produced for example by printing onto the substrate 92 or by engraving or embossing techniques.

In the example shown, each of the window regions 98a and 98b is a full window region defined by gaps in a opacifying layer 95 applied to the upper surface of substrate 92 and corresponding gaps in a second opacifying layer 96 applied to its underneath surface. However, in other cases either or both window regions 98a and 98b could be a half window region with opacifying layer 96 continuing across it. In this case, it should be ensured that the image element array 102a, 102b possess sufficient contrast against the opacifying layer 96.

Figure 7 shows a further example of a security document 110 with two window regions 118a and 118b each having a prismatic security device 120a, 120b. Examples of prismatic devices and the principles upon which they operate are disclosed in WO-A-2006/095161, WO-A-2008/029128 and WO-A-2011/066991. Each security device 120a, 120b comprises at least one relief structure provided on the upper and/or lower surfaces of substrate 112. Each relief structure defines a series of substantially planar facets. For example, the security device 120a comprises a set of triangular prisms 121a defining a series of planar faces in contact with the air. When the device is viewed from the underside of the document, at certain viewing angles, the facets will cause total internal reflection of light received through the substrate, returning it to the viewer and thus giving the security device a reflective appearance, whereas at other viewing angles reflection will not occur and the device will appear transparent. The device may also be visible to a lesser extent from the upper side of the substrate. The security device 120b comprises a first relief structure 121 b on the upper surface of substrate 112 and a second relief structure 122b on the lower surface of substrate 112. Again, each relief structure defines a series of substantially planar facets. The first relief structure 121b will show a strong switching characteristic between reflective and transparent when viewed from the underside of the document, whilst from that viewpoint the second relief structure 122b will appear substantially transparent, and vice versa. The relief structures 121b, 121c can be arranged to give the appearance of an image, in combination.

The relief structures 121a, 121b and 122b can be formed by applying a suitable transparent material to the substrate 112 and forming the desired relief structure in its surface as will be discussed further below. In this case, it is preferable for the window regions 118a, 118b to be full window regions and here this is achieved by corresponding gaps provided in opacifying layers 115 and 116 provided on either side of the substrate 112. However, in other cases either one of the depicted opacifying layers could be omitted.

As has been described above, the majority of window regions can be formed as full windows or half windows. Where the window region is a full window, further distinctive visual effects can be achieved by providing security devices on both sides of the substrate in the same window. An example of such an embodiment is depicted in Figure 8, where Figure 8a shows a security document 130 in plan view and Figure 8c shows the same document in cross-section along the line D to D'. Figure 8c also depicts the positions of two observers (i) and (ii), and it should be noted that Figure 8a shows the appearance of the document from the point of view of observer (i). Figure 8b is a detail sowing the appearance of a security device on the document seen from the point of view of observer (ii) (i.e. on the reverse side of the document to that shown in Figure 8a).

On the document 130, two window regions 138a and 138b are provided. Window region 138a is a full window region defined by overlapping gaps in a first opacifying layer 135 provided on the upper side of substrate 132 and second opacifying layer 136 provided on the underneath surface of the substrate 132. The window region 138b in this example is a half window defined by a gap in opacifying layer 135 only. As shown best in Figure 8c, two security devices 140a and 140c are provided in window region 138a on opposing sides of the substrate 132. In this example, each of the security devices 140a and 140c is a diffractive element such as a hologram and is of substantially the same construction as that described above with respect to security devices 10a and 10b in the Figure 1 embodiment. The security devices 140a and 140c are preferably provided in register to one another such that they both appear to have the same location when the document is viewed from either side. In a particularly preferred embodiment, the two security devices 140a and 140c replay images of the same holographic object, but from different viewpoints. Thus, in the example depicted in Figure 8, security device 140a replays an image of a block arrow pointing towards the viewer as shown in Figure 8a, whereas the security device 140c depicts the same block arrow pointing away from the viewer, as shown in Figure 8b. Thus, in combination, the two security devices 140a and 140c give the impression of a single three dimensional holographic object which the viewer can see from different aspects, spaced in this example by 180 degrees. This is particularly visually effective where the reflection enhancing material layer on the surface relief forming each of the security devices is transparent or semi-transparent, for example formed by a very thin layer of metal or a screened metal layer. In this way, the window appears transparent and the holographic images appear suspended within it.

The second, laterally spaced window region 138b can be provided with a security device 140b of any of the sorts discussed above.

In all of the embodiments, the various security devices could be formed using any appropriate techniques, such as forming the relief structures by embossing into a thermoplastic material. However, for high accuracy of reproduction of the reliefs and improved robustness, it is most preferable to form the relief structures using cast cure techniques. Generally, cast curing involves applying a curable material to the substrate, impressing the free surface of the material with a forming die carrying the desired relief structure and curing the material so that it retains the impressed relief structure. The curing may take place simultaneously as the material is formed by the dye and/or immediately thereafter. The curable material could be cured by heat or any other stimulant but, most preferably, the curable material is a radiation-curable material (e.g. UV-curable) and could for instance comprise a resin which may typically be one of two types: (i) free radical cure resins which are unsaturated resins e.g. monomers, pre-polymers, oligomers etc, containing vinyl or acrylate unsaturation for example and which cross-link through use of a photoinitiator activated by the radiation source employed, e.g. UV; or (ii) cationic cure resins in which ring opening (e.g. epoxy types) is effected using photo initiators or catalysts which generate ionic entities under the radiation source employed, e.g. UV. The ring opening is followed by intermolecular cross-linking. The radiation needed to effect curing may typically be UV radiation but could comprise electron beam, visible or even infrared or higher wavelength radiation, depending on the material, its absorbance and the processes used.

Each relief structure could be formed by means of individual cast cure processes. However, the use of a common cast cure process to form multiple relief structures on at least one side of the document (preferably all of the security reliefs provided on that side of the document) is strongly preferred. By forming the reliefs in a common process, the relief structures are provided in register to one another which ensures that the appearance of each document produced in series will match to a highly accurate degree. Not only is this extremely difficult to replicate by a counterfeiter but also ensures that any counterfeit documents which are produced are more easily distinguished from genuine examples.

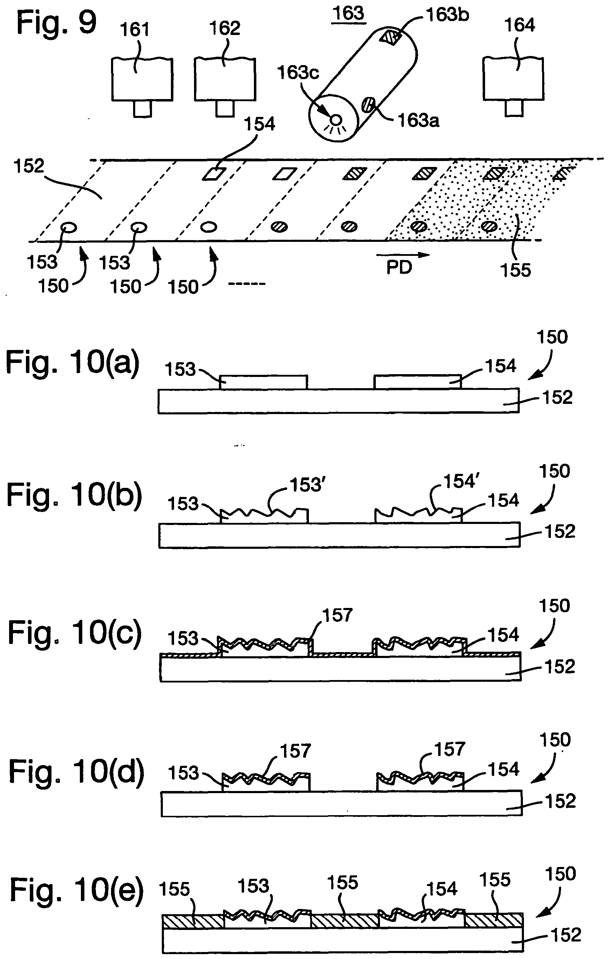

A schematic example of a common cast cure process will now be described with respect to Figure 9, which shows the production of a series of security documents 150 in a web-based process. A polymeric substrate 152 is transported along a process direction PD by a transport assembly which is not shown. Dashed lines indicate the positions at which the web of material will be cut into individual documents 150 downstream. In this example, the finished documents 150 are each provided with two window regions with corresponding security devices 153 and 154. First, curable material is applied to each of the regions which will form the security devices 153 and 154 and in the Figure 9 example this is achieved in two steps, by first depositing curable material in region 153 by means of a first applicator 161 and then depositing curable material in region 154 by means of a second applicator, 162. This arrangement lends itself well to the application of different curable materials e.g. different colours. Where both regions are to be formed using the same type of curable material, it is more preferable to apply both in a single application step. The web is then conveyed to an embossing station 163 which in this example comprises a die in the form of a cylindrical roller having the desired relief patterns 163a and 163b formed in its surface at the appropriate locations for contacting the curable material regions laid down at 153 and 154 on the substrate web. The relief structures are thus transferred into the surface of the curable material and simultaneously the curable material is cured by radiation source 163c which here is located within the embossing die roller, which is transparent to the curing radiation (e.g. quartz). The relief structures are thus cured and fixed in place. Downstream, an opacifying material is applied to define the extent of each window region and here this is achieved by deposit of a suitable opacifying coating from a further applicator 164. Since the two relief structures are formed together, from embossing die 163, they will be inherently in register with one another. In this example, since the opacifying layer 155 is also applied as part of the same inline process, the relief structures will also be registered to the gaps defining the window regions. Once processing is complete, the web can be cut into individual security documents 150.

It should be noted that many variants of the above process are possible. For example, the opacifying coating 155 could be applied before the curable material is applied to the substrate. The curable material(s) could also be applied directly to the embossing die and then transferred to the substrate as it is cured. Depending on the nature of the security devices, the method may typically include additional steps such as the application of a reflection enhancing material in the case of diffractive devices such as holograms and/or the application of device components to the opposite side of the substrate 152, such as microimage arrays which may be printed or otherwise formed thereon to complete moiré magnifier or lenticular type devices. Such application steps can also be carried out as part of the same inline process in order to achieve register. Other additional steps such as the application of a print receptive primer or corona treatment prior to the application of the curable material and/or opacifying layer(s) could be performed in order to improve adhesion of the substances to the underlying material.

One example of a process for producing two diffractive security devices on a document will be described in more detail with respect to Figures 10 a to e which show the document 150 at selected stages of manufacture. Figure 10a shows a cross-section through the security document 150 after application of curable material in regions 153 and 154 to the upper surface of substrate 152, e.g. byway of applicators (e.g. print heads) 161 and 162. Desired relief structures 153' and 154' are then cast into each region of curable material and cured for example using an embossing die as discussed with respect to Figure 9, resulting in the structure shown in Figure 10b. In this example, a reflection enhancing layer is then applied by performing all-over metallisation of the substrate as shown in Figure 10c to deposit a layer 157 of metal, such as aluminium, copper or nickel or any alloy thereof. The substrate is then selectively de-metallised in order to remove the reflection enhancing layer from areas of the substrate outside the regions which are to constitute the optically variable security devices. This can be achieved for example by applying a resist layer over the areas which are to be optically variable and then performing etching in order to remove the reflection enhancing material in all other regions. This results in the structure shown in Figure 10d. In other examples, selective metallisation could be achieved by applying a masking substance such as a soluble ink or oil mask to all regions of the substrate where the reflection enhancing layer is not desired prior to its deposition such that the reflection enhancing material is only retained in the regions which are to be optically variable in the finished product. Such processes are described in more detail in our copending British Patent Application No. 1308959.4.

Finally, in this example an opacifying layer 155 is applied by printing or coating to surround the completed security devices and define the window regions therewithin, resulting in the structure shown in Figure 10e.

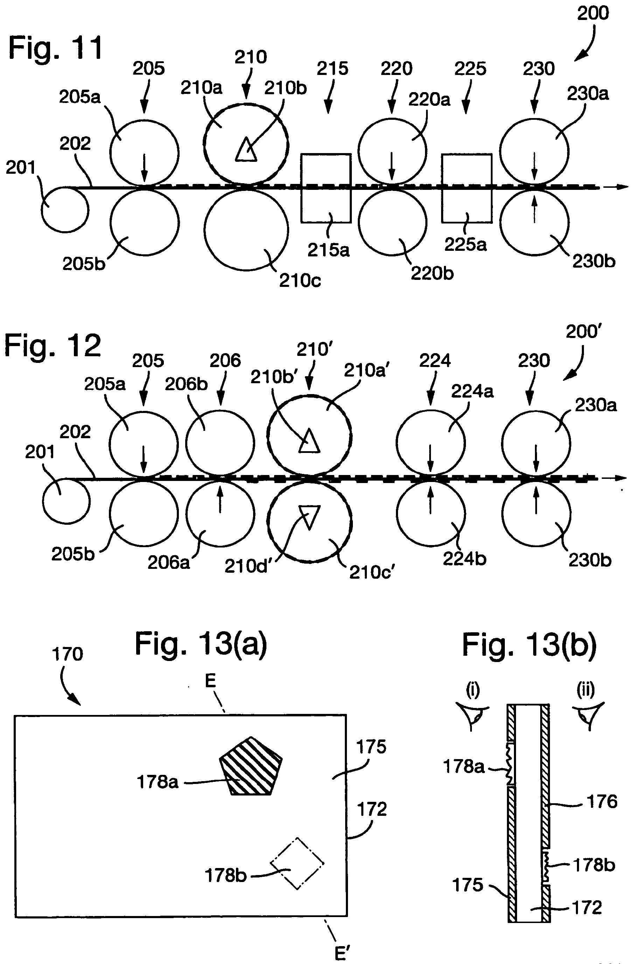

Corresponding exemplary apparatus for carrying out the process depicted in Figures 10 a to e is shown schematically in Figure 11. In the exemplary apparatus 200, a substrate 202 is provided from a supply reel 201 to a first station 205 for application of curable material onto the upper surface of the substrate. In this example, the station 205 comprises a single print roller 205a and an opposing idler roller 205b which is configured to apply curable material to each of the desired regions, although as mentioned above in other examples more than one application station could be used for this purpose. The substrate is then conveyed to a forming station 210 which comprises an embossing cylinder 210a having the desired relief structures carried in its surface and an opposing idler roller 210c. A curing radiation source 210b is provided, here internal to embossing roller 210a, to simultaneously cure the material such that the relief structures are retained. The substrate is then conveyed to a metallisation station 215 which comprises a deposition chamber 215a where the upper surface of the substrate 202 is coated with metal, e.g. by vacuum or vapour deposition using any appropriate technique. At the next station 220, a further print roller 220a and opposing idler roller 220b are used to apply resist to the appropriate locations which are to be optically variable in the finished product and at station 225 the substrate passes through an etching chamber 225a to remove all regions of metallisation not covered by resist. At final station 230, opacifying material is applied, in this case to both sides of the substrate by print rollers 230a and 230b. On the upper side of the substrate, print roller 230a applies opacifying material outside the desired window regions and, on the opposite side, print roller 230b may include corresponding gaps in its coverage so as to produce full window regions. Alternatively, the opacifying coating on the underside of the substrate may be continuous so as to produce half window regions.

It should be noted that the resist material deposited at station 225 could in itself be utilised to modify the appearance of the security devices through the use of different coloured resists which are then retained in the final product, optionally to act as a protective layer such as layer 14 in Figure 1. Examples of such devices are disclosed in more detail in British Patent Application no. 1301788.4.

In cases where relief structures are to be formed on both sides of the substrate, this could be achieved by sequential cast cure processes applied to one side of the substrate and then the other, preferably in an inline process to achieve good registration. Alternatively, simultaneous cast cure processes could be carried out on both sides of the substrate and an example of such a process will now be described with respect to Figure 12. Components of the apparatus 200' which are the same as those already discussed with respect to Figure 11 are denoted using the same reference numerals and will not be described in detail again. After curable material has been applied where necessary to a first side of the substrate at station 205, the substrate is conveyed to a second station 206 where curable material is applied by print head 206a and opposing idler roller 206b to the opposite side of the substrate at the desired location(s). The substrate is then conveyed to a modified forming station 210' which comprises two opposed embossing die rollers 210a' and 210c', each of which carries the relief structures to be applied to the security devices on each side of the substrate. Again, appropriate curing radiation sources 210b' and 210d' will be provided as necessary. In this example, the reflection enhancing material takes the form of a binder containing a dispersion of reflective particles such as a metallic ink, and this is applied at further print station 224 comprising opposing print rollers 224a and 224b. Of course, a metallisation and demetallisation process such as that described with respect to Figure 11 could be used instead. Finally, as before, opacifying layers are applied to each side of the substrate at station 230.

As mentioned previously, any of the above methods could also be modified by applying the curable material directly to the embossing roller from which it will be transferred to the substrate. In this way, the application of the curable material to the substrate and the formation of the relief therein occurs substantially simultaneously.

The manufacturing method could further be modified in accordance with any of the techniques disclosed in our British patent application numbers 1301788.4, 1301790.0 or 1301792.6 to produce any of the security devices disclosed therein. These are examples of dual sided security devices which exhibit optically variable effects which can be viewed from either side of the device.

Figures 13, 14, 15 and 16 depict further variants of security documents which can be formed using the above described principles.

A further embodiment of a security document 170 is shown in Figure 13a in plan view and Figure 13b in cross-section along the line E to E'. The security document is provided with two window regions 178a and 178b with corresponding security devices provided therein. In this example, both of the window regions 178a and 178b are half windows as shown best in Figure 13b. The two security devices are visible only from opposite sides of the security document. Thus, window region 178a is defined by a gap in first opacifying layer 175 applied to the upper surface of the substrate 172 and the security device disposed in the window on the same surface of the substrate 172 is visible only from the point of view from observer (i) on the same side of the substrate (as shown in Figure 13a). The security device 178b is provided on the opposite side of the substrate and hence is not visible in the plan view 13a (its location is denoted using broken lines). However, from the point of view of observer 2 on the opposite side of the substrate, the second security device 178b is visible. Embodiments such as this are generally less preferred since the two optically variable effects cannot be viewed simultaneously by a person handling the document. However, in transmission the half windows may be visible from both sides, allowing the relative positions of the two windows to be compared. This effect may be usefully exploited by designing the shape and position of the two or more windows to have a meaningful relationship when viewed in transmitted light. For example, they may combine to form an item of information. In one example, a first window could take the shape of a currency symbol such as "£" and a second could take the shape of a number, e.g. "5", such that in transmitted light, the combination of denomination and currency of the document is visible: "£5".

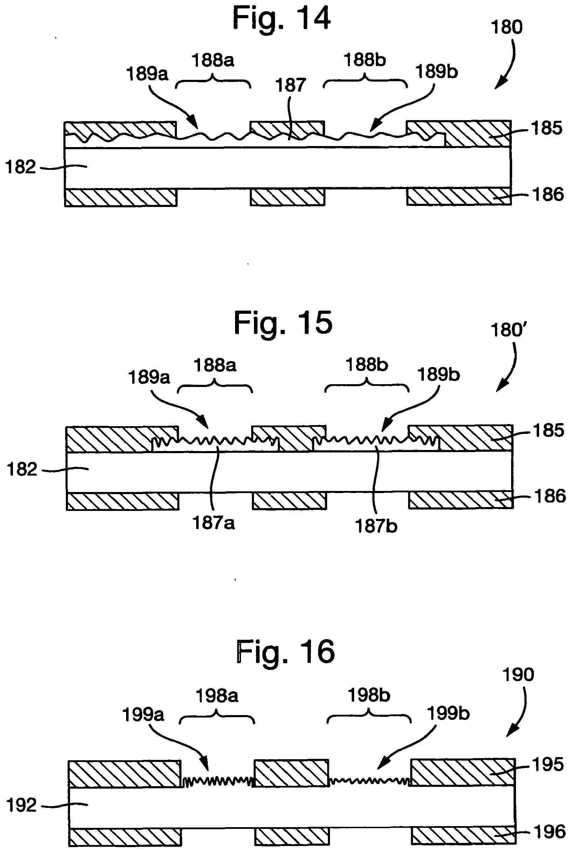

In the exemplary embodiments discussed above, the relief structures are described as being located fully within each window region. However, this is not essential since, as shown in Figure 14, the relief structure may extend some distance underneath the opacifying material. Figure 14 shows an embodiment of a security document 180 having two window regions 188a and 188b defined by corresponding gaps in opacifying layer 185 and opposite opacifying layer 186. Corresponding security devices 189a and 189b are formed in each window region 188a and 188b by a relief structure formed in a layer of material 187. The material 187 and optionally the relief structure formed therein in this example extends all the way under the region of opacifying material 185 which defines the separation between window regions 188a and 188b and under portions of the opacifying material 185 on either side. Since the presence of the relief structure in these regions is masked by the opacifying material 185, this does not affect the appearance of the security devices within the window regions 188a and 188b.

Figure 15 shows a modified security document 180' of substantially the same construction as that shown in Figure 14 except, in this case, the relief structures forming security devices 189a and 189b are formed in separate layers of material 187a and 187b which are discontinuous between the window regions 188a and 188b. This is preferred to improve adhesion between the opacifying layers and the substrate, and hence durability, and will also be desirable where the two cast cure resins are different (e.g. different colours). Nonetheless, at the edge of each security device, the opacifying material 185 extends by a short distance over the material 187a, 187b such that a small area of the relief is masked.

Embodiments such as those shown in Figures 14 and 15 may be preferred for example where it is desired for the secure visual effect to extend across the entire window region with no gap at the edges.

In all of the above embodiments, the relief structures forming the security devices are provided in layers of material applied to the surface of the substrate. However, this is not essential since, depending on the material from which the substrate is formed, the relief structures could be formed directly in its surface. An example of such an embodiment is shown in Figure 16 where security document 190 has two laterally spaced window regions 198a and 198b each having respective security device 199a and 199b. In this case, the relief structures are embossed directly into the surface of substrate 192, which may be a multi-layer substrate including an embossing lacquer layer which forms its upper surface. The relief structures can be formed directly in the substrate 192 under the action of heat and pressure and may subsequently be provided with additional features such as a reflection enhancing layer in the case of diffractive devices or opposing microimage element arrays as previously discussed.

## Claims

1. A plurality of security documents, each of the plurality of security documents comprising:
a polymer substrate having first and second surfaces, at least one opacifying layer on the first and/or second surface of the substrate, and a plurality of laterally-spaced window regions, each window region being defined by a gap in at least one of the opacifying layer(s), at least one of the opacifying layers being present between the laterally-spaced window regions, each of the plurality of window regions containing a security device comprising at least an optically variable effect generating relief structure on the first or second surface of the substrate, each of the respective security devices exhibiting an optically variable effect of different appearance from one another, wherein the respective relief structures are formed in a layer of curable material applied to the surface of the substrate, and the respective relief structures on at least one surface of the substrate are in register with one another such that the relief structures have substantially the same position with respect to one another on each of the plurality of security documents.

2. A plurality of security documents according to claim 1, wherein the different appearances of the security devices is a result of one or more of:
different information content;
different size of displayed information;
different colour; and/or
different optically variable effect generating mechanism.

3. A plurality of security documents according to claim 1 or claim 2, wherein the optically variable effect generating relief structures of the respective security devices are different.

4. A plurality of security documents according to any of the preceding claims, wherein the plurality of window regions comprises at least three window regions, the at least three window regions not lying on a straight line, wherein optionally a boundary connecting each of the window regions closest to the edges of the security document so as to contain all of the window regions therewithin has an area which is at least 15%, preferably at least 30%, more preferably at least 50 %, of the total document area.

5. A plurality of security documents according to any of the preceding claims, wherein the layer of curable material is discontinuous between window regions.

6. A plurality of security documents according to any of the preceding claims wherein at least one of the opacifying layer(s) is provided on the first surface of the substrate and comprises gaps defining the plurality of window regions, and preferably another of the at least one opacifying layers is provided on the second surface of the substrate, wherein still preferably at least one of the window regions is a half window region, the at least one opacifying layer on the second surface of the substrate overlapping the gap in the at least one opacifying layer on the first surface of the substrate to form the half window region.

7. A plurality of security documents according to any of the preceding claims, wherein at least one of the security devices is:
a diffractive relief device such as a hologram, diffraction grating or Kinegram®, the optically variable effect generating relief structure defining a diffractive relief, and further comprises a layer of reflection enhancing material on the optically variable effect generating relief structure, the reflection enhancing layer following the contours of the relief; or
a moiré magnifier device, the optically variable effect generating relief structure defining an array of micro-focusing elements, and further comprises an array of microimage elements disposed on the opposite surface of the substrate, wherein the pitches of the micro-focusing elements and the array of microimage elements and their relative locations are such that the array of micro-focusing elements cooperates with the array of microimage elements to generate a magnified version of the microimage elements due to the moiré effect; or
a lenticular device, the optically variable effect generating relief structure defining an array of lenses, and further comprises an image pattern disposed on the opposite surface of the substrate, the image pattern preferably comprising elements of a first image and elements of a second image arranged such that when the lenticular device is viewed from a first angle, a focussed version of the first image is generated, and when the lenticular device is viewed from a second angle, a focussed version of the second image is generated; or
a prismatic device, the optically variable effect generating relief structure comprising a prismatic surface structure defining an array of substantially planar facets, forming a reflector due to total internal reflection when viewed at at least one first viewing angle and being transparent when viewed at at least one second, different, viewing angle.

8. A plurality of security documents according to any of the preceding claims, wherein the security documents are banknotes, such as polymer banknotes or hybrid paper/polymer banknotes, identity documents, passports, identification cards, cheques, visas, certificates, or stamps.

9. A method of manufacturing a security document, comprising:
providing a polymer substrate, and then, in any order:
(a) applying at least one opacifying layer to the first and/or second surface of the substrate, whereby a plurality of laterally-spaced window regions are defined by corresponding gaps in the at least one opacifying layer, at least one of the opacifying layers being present between the laterally-spaced window regions; and
(b) providing a security device in each window region by at least forming an optically variable effect generating relief structure on the first or second surface of the substrate, each of the respective security devices exhibiting an optically variable effect of different appearance from one another;
wherein in step (b) each optically variable effect generating relief structure is formed using a cast-cure process comprising:
(b1) applying a layer of curable material to the first or second surface of the substrate within each window region;
(b2) forming the respective relief structures in the surface of the curable material; and
(b3) curing the curable material such that the respective relief structures are fixed;
where steps (b2) and (b3) may be performed simultaneously or sequentially;
and wherein a plurality of the optically variable effect generating relief structures are formed in respective window regions on the same surface of the substrate using a common cast-cure process.

10. A method according to claim 9, wherein the different appearances of the security devices is a result of one or more of:
different information content;
different size of displayed information;
different colour; and/or
different optically variable effect generating mechanism.

11. A method according to claim 9 or claim 10, wherein the optically variable effect generating relief structures of the respective security devices are different.

12. A method according to any of claims 9 to 11, wherein the relief structures are formed in register to the gaps defining the window regions in the at least one opacifying layer.

13. A method according to any of claims 9 to 12, wherein in step (b1) of the common cast-cure process, the curable material is applied to the same surface of the substrate within at least two window regions in a single application step, preferably a single printing step.

14. A method according to any of claims 9 to 13, wherein in step (b2) of the common cast-cure process, the respective relief structures on the same surface of the substrate within at least two window regions are formed in a single forming step, preferably a single embossing step.

15. A method according to any of claims 9 to 14, wherein a first common cast-cure process is used to form a plurality of optically variable effect generating relief structures on the first surface of the substrate and a second common cast-cure process is used to form a plurality of optically variable effect generating relief structures on the second surface of the substrate, the first and second common cast-cure processes preferably being performed in register with one another, most preferably in an in-line manufacturing process.

16. A method according to any of claims 9 to 15, wherein step (a) comprises applying at least one opacifying layer to the first surface of the substrate which comprises gaps defining the plurality of window regions, and preferably step (a) further comprises applying at least one opacifying layer to the second surface of the substrate, wherein still preferably at least one of the window regions is a half window region, the at least one opacifying layer on the second surface of the substrate overlapping the gap in the at least one opacifying layer on the first surface of the substrate to form the half window region.

## Patentansprüche

1. Eine Vielzahl von Sicherheitsdokumenten, wobei jedes der Vielzahl von Sicherheitsdokumenten umfasst:
Ein Polymersubstrat mit ersten und zweiten Oberflächen, mindestens einer trübenden Schicht auf der ersten und/oder zweiten Oberfläche des Substrats und einer Vielzahl von lateral beabstandeten Fensterbereichen, wobei jeder Fensterbereich durch eine Lücke in mindestens einer der trübenden Schicht(en) definiert ist, wobei mindestens eine der trübenden Schichten zwischen den lateral beabstandeten Fensterbereichen vorhanden ist, wobei jeder der Vielzahl von Fensterbereichen eine Sicherheitsvorrichtung enthält, die mindestens eine Reliefstruktur, die einen optisch variablen Effekt erzeugt, auf der ersten oder zweiten Oberfläche des Substrats umfasst, wobei jede der jeweiligen Sicherheitsvorrichtungen einen optisch variablen Effekt verschiedenen Aussehens von einander erzeugt, wobei die jeweiligen Reliefstrukturen in einer Schicht härtbaren Materials gebildet sind, das auf die Oberfläche des Substrats appliziert wurde, und die jeweiligen Reliefstrukturen auf mindestens einer Oberfläche des Substrats in Register miteinander sind, derart, dass die Reliefstrukturen im Wesentlichen die gleiche Position in Bezug aufeinander auf jedem der Vielzahl von Sicherheitsdokumenten haben.

2. Eine Vielzahl von Sicherheitsdokumenten nach Anspruch 1, wobei die verschiedenen Aussehen der Sicherheitsvorrichtungen ein Ergebnis eines oder mehreren der Folgenden sind:
Verschiedener Informationsinhalt;
verschiedene Größe der angezeigten Information;
verschiedene Farbe; und/oder
Mechanismus, der verschiedene, optisch variable Effekte erzeugt.

3. Eine Vielzahl von Sicherheitsdokumenten nach Anspruch 1 oder Anspruch 2, wobei die Reliefstrukturen der jeweiligen Sicherheitsvorrichtungen, die optisch variable Effekte erzeugen, verschieden sind.

4. Eine Vielzahl von Sicherheitsdokumenten nach einem der vorhergehenden Ansprüche, wobei die Vielzahl von Fensterbereichen mindestens drei Fensterbereiche umfasst, wobei die mindestens drei Fensterbereiche nicht auf einer geraden Linie liegen, wobei optional eine Begrenzung, die jeden der Fensterbereiche, der den Rändern des Sicherheitsdokuments am nächsten ist, verbindet, um alle der Fensterbereiche darin einzuschließen, eine Fläche aufweist, die mindestens 15%, vorzugsweise mindestens 30%, noch bevorzugter mindestens 50 % der gesamten Dokumentfläche ist.

5. Eine Vielzahl von Sicherheitsdokumenten nach einem der vorhergehenden Ansprüche, wobei die Schicht aus härtbarem Material zwischen den Fensterbereichen diskontinuierlich ist.

6. Eine Vielzahl von Sicherheitsdokumenten nach einem der vorhergehenden Ansprüche, wobei mindestens eine der trübenden Schicht(en) auf der ersten Oberfläche des Substrats bereitgestellt ist und Lücken umfasst, welche die Vielzahl von Fensterbereichen definieren, und vorzugsweise eine weitere der mindestens einen trübenden Schichten auf der zweiten Oberfläche des Substrats bereitgestellt ist, wobei noch bevorzugter mindestens einer der Fensterbereiche ein Halbfensterbereich ist, wobei die mindestens eine trübende Schicht auf der zweiten Oberfläche des Substrats die Lücke in der mindestens einen trübenden Schicht auf der ersten Oberfläche des Substrats überlappt, um den Halbfensterbereich zu bilden.

7. Eine Vielzahl von Sicherheitsdokumenten nach einem der vorhergehenden Ansprüche, wobei mindestens eine der Sicherheitsvorrichtungen ist:
Eine beugende Reliefvorrichtung wie beispielsweise ein Hologramm, Beugungsgitter oder Kinegram® ist, die Reliefstruktur, die einen optisch variablen Effekt erzeugt, ein beugendes Relief definiert, und ferner eine Schicht aus Reflexion verbesserndem Material auf der Reliefstruktur umfasst, die den optisch variablen Effekt erzeugt, wobei die Reflexion verbessernde Schicht den Konturen des Reliefs folgt; oder
eine Moiré-Vergrößerungsvorrichtung, wobei die Reliefstruktur, die einen optisch variablen Effekt erzeugt, eine Anordnung von Mikrofokussierelementen definiert, und ferner eine Anordnung von Mikrobildelementen umfasst, die auf der entgegengesetzten Oberfläche des Substrats angeordnet sind, wobei die Teilungen der Mikrofokussierelemente und die Anordnung von Mikrobildelementen und deren relative Positionen derart sind, dass die Anordnung von Mikrofokussierelementen mit der Anordnung von Mikrobildelementen kooperiert, um eine vergrößerte Version der Mikrobildelemente, aufgrund des Moire-Effekts, zu erzeugen;
oder eine linsenförmige Vorrichtung, wobei die Reliefstruktur, die einen optisch variablen Effekt erzeugt, eine Anordnung von Linsen definiert, und ferner ein Bildmuster umfasst, das auf der entgegengesetzten Oberfläche des Substrats angeordnet ist, wobei das Bildmuster vorzugsweise Elemente eines ersten Bildes und Elemente eines zweiten Bildes umfasst, die derart angeordnet sind, dass, wenn die linsenförmige Vorrichtung von einem ersten Winkel aus betrachtet wird, eine fokussierte Version des ersten Bildes erzeugt wird und, wenn die linsenförmige Vorrichtung von einem zweiten Winkel aus betrachtet wird, eine fokussierte Version des zweiten Bildes erzeugt wird; oder
eine prismatische Vorrichtung, wobei die Reliefstruktur, die einen optisch variablen Effekt erzeugt, eine prismatische Oberflächenstruktur umfasst, die eine Anordnung von im Wesentlichen ebenflächigen Facetten definiert, die, aufgrund der gesamten internen Reflexion, einen Reflektor bilden, wenn sie in mindestens einem ersten Betrachtungswinkel betrachtet werden und transparent sind, wenn sie in mindestens einem zweiten, verschiedenen Betrachtungswinkel betrachtet werden.

8. Eine Vielzahl von Sicherheitsdokumenten nach einem der vorhergehenden Ansprüche, wobei die Sicherheitsdokumente Banknoten, wie beispielsweise polymere Banknoten oder hybride Papier/Polymer-Banknoten, Identitätsdokumente, Reisepässe, Kennkarten, Schecks, Visa, Zertifikate oder Briefmarken sind.

9. Verfahren zur Herstellung eines Sicherheitsdokuments, umfassend:
Bereitstellen eines Polymersubstrats, und danach, in irgendeiner Reihenfolge:
(a) Aufbringen mindestens einer trübenden Schicht auf die erste und/oder zweite Oberfläche des Substrats, wodurch eine Vielzahl lateral beabstandeter Fensterbereiche durch entsprechende Lücken in der mindestens einen trübenden Schicht definiert wird, wobei mindestens eine der trübenden Schichten zwischen den lateral beabstandeten Fensterbereichen vorhanden ist; und
(b) Bereitstellen einer Sicherheitsvorrichtung in jedem Fensterbereich durch mindestens die Bildung einer Reliefstruktur, die einen optisch variablen Effekt erzeugt, auf der ersten oder zweiten Oberfläche des Substrats, wobei jede der jeweiligen Sicherheitsvorrichtungen einen optisch variablen Effekt verschiedenen Aussehens voneinander zeigt;
wobei in Schritt (b) jede Reliefstruktur, die einen optisch variablen Effekt erzeugt, unter Verwendung eines "Cast-Cure" (Guss/Härtung) Prozesses, der umfasst:
(b1) Aufbringen einer Schicht härtbaren Materials auf die erste oder zweite Oberfläche des Substrats innerhalb jedes Fensterbereichs;
(b2) Bilden der jeweiligen Reliefstrukturen in der Oberfläche des härtbaren Materials; und
(b3) Härten des härtbaren Materials, derart, dass die jeweiligen Reliefstrukturen fixiert sind;
wobei die Schritte (b2) und (b3) simultan oder sequenziell ausgeführt werden können;
und wobei eine Vielzahl der Reliefstrukturen, die einen optisch variablen Effekt erzeugen, in jeweiligen Fensterbereichen aus der gleichen Oberfläche des Substrats unter Verwendung eines gemeinsamen "Cast-Cure" Prozesses gebildet wird.

10. Ein Verfahren nach Anspruch 9, wobei die verschiedenen Aussehen der Sicherheitsdokumente ein Ergebnis eines oder mehreren der Folgenden sind:
Verschiedener Informationsinhalt;
verschiedene Größe der angezeigten Information;
verschiedene Farbe; und/oder
Mechanismus, der verschiedene, optisch variable Effekte erzeugt.

11. Ein Verfahren nach Anspruch 9 oder Anspruch 10, wobei die Reliefstrukturen der jeweiligen Sicherheitsvorrichtungen, die einen optisch variablen Effekt erzeugen, verschieden sind.

12. Ein Verfahren nach einem der Ansprüche 9 bis 11, wobei die Reliefstrukturen in Register den Lücken gebildet sind, welche die Fensterbereiche in der mindestens einen trübenden Schicht definieren.

13. Ein Verfahren nach einem der Ansprüche 9 bis 12, wobei in Schritt (b1) des gemeinsamen "Cast-Cure" Prozesses, das härtbare Material auf die gleiche Oberfläche des Substrats innerhalb von zwei Fensterbereichen in einem einzigen Anwendungsschritt, vorzugsweise einem einzigen Druckschritt aufgebracht wird.

14. Ein Verfahren nach einem der Ansprüche 9 bis 13, wobei in Schritt (b2) des gemeinsamen "Cast-Cure" Prozesses die jeweiligen Reliefstrukturen auf der gleichen Oberfläche des Substrats innerhalb von mindestens zwei Fensterbereichen in einem einzigen Formungsschritt, vorzugsweise einem einzigen Prägungsschritt gebildet werden.

15. Ein Verfahren nach einem der Ansprüche 9 bis 14, wobei ein erster gemeinsamer "Cast-Cure" Prozess verwendet wird, um eine Vielzahl von Reliefstrukturen, die optisch variable Effekte erzeugen, auf der ersten Oberfläche des Substrats zu bilden und ein zweiter gemeinsamer "Cast-Cure" Prozess verwendet wird, um eine Vielzahl von Reliefstrukturen, die optisch variable Effekte erzeugen, auf der zweiten Oberfläche des Substrats zu bilden, wobei die ersten und zweiten gemeinsamen "Cast-Cure" Prozesse vorzugsweise in Register mit einander, am meisten bevorzugt in einem "In-Line" Herstellungsprozess, ausgeführt werden.

16. Ein Verfahren nach einem der Ansprüche 9 bis 15, wobei der Schritt (a) das Aufbringen mindestens einer trübenden Schicht auf eine erste Oberfläche des Substrats umfasst, das Lücken umfasst, welche die Vielzahl von Fensterbereichen definieren, und vorzugsweise der Schritt (a) ferner das Aufbringen mindestens einer trübenden Schicht auf die zweite Oberfläche des Substrats umfasst, wobei noch bevorzugter mindestens einer der Fensterbereiche ein Halbfensterbereich ist, die mindestens eine trübenden Schicht auf der zweiten Oberfläche des Substrats die Lücke in der mindestens einen trübenden Schicht auf der ersten Oberfläche des Substrats überlappt, um den Halbfensterbereich zu bilden.

## Revendications

1. Pluralité de documents de sécurité, chacun des documents parmi la pluralité de documents de sécurité comportant:
un substrat en polymère comprenant une première et une deuxième surfaces, au moins une couche opacifiante sur la première et/ou la deuxième surface du substrat, et une pluralité de zones-fenêtre latéralement espacées, chaque zone-fenêtre étant définie par un intervalle dans au moins l'une des couches opacifiantes, au moins l'une des couches opacifiantes étant présente entre les zones-fenêtre latéralement espacées, chacune parmi la pluralité de zones-fenêtre contenant un dispositif de sécurité qui comprend au moins une structure en relief produisant un effet optiquement variable sur la première ou la deuxième surface du substrat, chacun des dispositifs de sécurité respectifs montrant un effet optiquement variable d'aspect différent, les uns par rapport aux autres, **caractérisé en ce que** les structures en relief respectives sont formées dans une couche de matériau durcissable appliquée à la surface du substrat, et **en ce que** les structures en relief respectives qui se trouvent au moins sur l'une des surfaces du substrat sont mises en registre, les unes par rapport aux autres, de sorte que les structures en relief occupent essentiellement la même position, les unes par rapport aux autres, sur chaque document parmi la pluralité de documents de sécurité.

2. Pluralité de documents de sécurité selon la revendication 1, **caractérisée en ce que** les différents aspects des dispositifs de sécurité résultent de l'un ou plusieurs des éléments suivants:
information contenue différente;
dimensions différentes de l'information présentée;
couleur différente; et/ou
mécanisme différent de production d'effet optiquement variable.

3. Pluralité de documents de sécurité selon la revendication 1 ou la revendication 2, **caractérisée en ce que** les structures en relief produisant un effet optiquement variable des dispositifs de sécurité respectifs sont différentes.

4. Pluralité de documents de sécurité selon l'une quelconque des revendications précédentes, **caractérisée en ce que** la pluralité de zones-fenêtre comporte au moins trois zones-fenêtre, celles-ci n'étant pas disposées en ligne droite, **caractérisée en ce que**, en option, une limite raccordant chacune des zones-fenêtre qui sont les plus proches des bords du document de sécurité de manière à contenir la totalité de ces zones-fenêtre, est d'une superficie supérieure d'au moins 15%, de préférence d'au moins 30%, et de préférence encore d'au moins 50%, à celle de la superficie totale du document.

5. Pluralité de documents de sécurité selon l'une quelconque des revendications précédentes, **caractérisée en ce que** la couche de matériau durcissable est discontinue entre les zones-fenêtre.

6. Pluralité de documents de sécurité selon l'une quelconque des revendications précédentes, **caractérisée en ce qu'**au moins l'une des couches opacifiantes est prévue sur la première surface du substrat et comporte des intervalles qui définissent la pluralité de zones-fenêtre, et **en ce que** de préférence une autre des couches opacifiantes, prévues en au moins un exemplaire, est prévue sur la deuxième surface du substrat, **caractérisée en ce que**, de préférence encore, au moins l'une des zones-fenêtre est une demie zone-fenêtre, la couche opacifiante prévue en au moins un exemplaire sur la deuxième surface du substrat chevauchant l'intervalle dans la couche opacifiante prévue en au moins un exemplaire sur la première surface du substrat pour former la demie zone-fenêtre.

7. Pluralité de documents de sécurité selon l'une quelconque des revendications précédentes, **caractérisée en ce qu'**au moins l'un des dispositifs de sécurité est un élément suivant:
un dispositif de diffraction en relief comme par exemple un hologramme, un réseau de diffraction ou un Kinegram®. la structure en relief qui produit un effet optiquement variable définissant une diffraction en relief, et comportant par ailleurs une couche de matériau d'accroissement de la réflexion sur la structure en relief qui produit un effet optiquement variable, la couche d'accroissement de la réflexion suivant les contours du relief, ou bien
un dispositif de grossissement de moiré, la structure en relief qui produit un effet optiquement variable définissant un ensemble d'éléments micro-focalisants, et comportant par ailleurs un ensemble de micro-images disposées sur la surface opposée du substrat, **caractérisé en ce que** l'espacement entre les éléments micro-focalisants et l'ensemble de micro-images et leurs emplacements relatifs sont tels que l'ensemble d'éléments micro-focalisants coopère avec l'ensemble de micro-images pour produire une version grossie des micro-images en raison de l'effet de moiré; ou bien
un dispositif lenticulaire, la structure en relief qui produit un effet optiquement variable définissant un ensemble de lentilles, et elle comporte par ailleurs une configuration d'images disposée sur la surface opposée du substrat, cette configuration d'images comprenant de préférence des éléments d'une première image et des éléments d'une deuxième image disposés de telle manière que, pour un observateur qui regarde à partir d'un premier angle, une version focalisée de la première image est produite, et lorsque l'observateur regarde le dispositif lenticulaire à partir d'un deuxième angle, une version focalisée de la deuxième image est produite; ou bien
un dispositif prismatique, la structure en relief qui produit un effet optiquement variable comprenant une structure à surface prismatique qui définit un ensemble de facettes essentiellement plates formant un réflecteur en raison de la réflexion interne totale pour un observateur qui regarde à partir d'au moins un premier angle de visualisation, et qui est transparent pour un observateur qui regarde à partir d'au moins un deuxième angle de visualisation qui est différent du premier.

8. Pluralité de documents de sécurité selon l'une quelconque des revendications précédentes, **caractérisée en ce que** les documents de sécurité sont des billets de banque, par exemple des billets de banque en polymère ou des billets de banque hybrides en papier/polymère, des documents d'identité, des passeports, des cartes d'identification, des chèques, des visas, des certificats ou des timbres.

9. Procédé de fabrication d'un document de sécurité qui consiste:
à prévoir un substrat en polymère et ensuite, dans n'importe quel ordre:
(a) à appliquer au moins une couche opacifiante sur la première surface et/ou sur la deuxième surface du substrat, **caractérisé en ce qu'**une pluralité de zones-fenêtre latéralement espacées sont définies par des intervalles correspondants dans la couche opacifiante prévue en au moins un exemplaire, au moins l'une des couches opacifiantes étant présente entre les zones-fenêtre latéralement espacées; et
(b) à fournir un dispositif de sécurité dans chaque zone-fenêtre en formant tout du moins une structure en relief qui produit un effet optiquement variable sur la première ou la deuxième surface du substrat, chacun des dispositifs de sécurité respectifs montrant un effet optiquement variable d'aspect différent, les uns par rapport aux autres;
**caractérisé en ce que**, lors de l'étape (b), chaque structure en relief produisant un effet optiquement variable est formée au moyen d'un procédé de moulage-durcissement qui consiste à:
(b1) appliquer sur la première ou la deuxième surface du substrat une couche de matériau durcissable à l'intérieur de chaque zone-fenêtre;
(b2) former les structures en relief respectives dans la surface du matériau durcissable; et à
(b3) durcir le matériau durcissable de manière à fixer les structures en relief respectives;
les étapes (b2) et (b3) pouvant s'effectuer simultanément ou bien de manière séquentielle;
et **caractérisé en ce que** la pluralité de structures en relief produisant un effet optiquement variable sont formées dans les zones-fenêtre respectives sur la même surface du substrat au moyen d'un procédé commun de moulage-durcissement.

10. Procédé selon la revendication 9, **caractérisé en ce que** les différents aspects des dispositifs de sécurité résultent de l'un ou plusieurs des éléments suivants:
information contenue différente;
dimensions différentes de l'information présentée;
couleur différente; et/ou
mécanisme différent de production d'effet optiquement variable.

11. Procédé selon la revendication 9 ou la revendication 10, **caractérisé en ce que** les structures en relief produisant un effet optiquement variable des dispositifs de sécurité respectifs sont différentes.

12. Procédé selon l'une quelconque des revendications 9 à 11, **caractérisé en ce que** les structures en relief sont mises en registre avec les intervalles qui définissent les zones-fenêtre dans au moins l'une des couches opacifiantes.

13. Procédé selon l'une quelconque des revendications 9 à 12, **caractérisé en ce que** au cours de l'étape (b1) du procédé de moulage-durcissement commun, le matériau durcissable est appliqué sur la même surface du substrat à deux zones-fenêtre près au moins en une seule étape d'application, de préférence une seule étape d'impression.

14. Procédé selon l'une quelconque des revendications 9 à 13, **caractérisé en ce que** au cours de l'étape (b2) du procédé de moulage-durcissement commun, les structures en relief respectives sur la même surface du substrat qui se trouvent à deux zones-fenêtre près au moins, sont formées en une seule étape de réalisation, de préférence une seule étape de gaufrage.

15. Procédé selon l'une quelconque des revendications 9 à 14, **caractérisé en ce qu'**un premier procédé de moulage-durcissement commun est employé pour former une pluralité de structures en relief produisant un effet optiquement variable sur la première surface du substrat, et **en ce qu'**un deuxième procédé de moulage-durcissement commun est employé pour former une pluralité de structures en relief produisant un effet optiquement variable sur la deuxième surface du substrat, les premier et deuxième procédés de moulage-durcissement commun se trouvant en registre l'un avec l'autre, de préférence dans un procédé de fabrication en ligne.

16. Procédé selon l'une quelconque des revendications 9 à 15, **caractérisé en ce que** l'étape (a) consiste à appliquer au moins une couche opacifiante sur la première surface du substrat qui comporte des intervalles définissant la pluralité de zones-fenêtre, et de préférence l'étape (a) consiste par ailleurs à appliquer au moins une couche opacifiante sur la deuxième surface du substrat, **caractérisé en ce que**, de préférence encore, au moins l'une des zones-fenêtre est une demie zone-fenêtre, la couche opacifiante prévue en au moins un exemplaire sur la deuxième surface du substrat chevauchant l'intervalle dans la couche opacifiante prévue en au moins un exemplaire sur la première surface du substrat, ceci pour former la demie zone-fenêtre.
